(19) Europäisches Patentamt / European Patent Office / Office européen des brevets

(11) **EP 2 002 607 B1**

(12) **EUROPÄISCHE PATENTSCHRIFT**

(45) Veröffentlichungstag und Bekanntmachung des Hinweises auf die Patenterteilung:
**20.11.2013 Patentblatt 2013/47**

(21) Anmeldenummer: **07712324.8**

(22) Anmeldetag: **26.02.2007**

(51) Int Cl.:
***H04L 12/40*** (2006.01)

(86) Internationale Anmeldenummer:
**PCT/EP2007/051798**

(87) Internationale Veröffentlichungsnummer:
**WO 2007/107432 (27.09.2007 Gazette 2007/39)**

(54) **Verfahren und System zum Übertragen von Daten**

Method and system for transmitting data

Procédé et système de transmission de données

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.03.2006 DE 102006013872**

(43) Veröffentlichungstag der Anmeldung:
**17.12.2008 Patentblatt 2008/51**

(73) Patentinhaber: **Robert Bosch GmbH**
**70442 Stuttgart (DE)**

(72) Erfinder:
- **ROETTGER, Kai**
  **70376 Stuttgart (DE)**
- **FROHNA, Michael**
  **74343 Sachsenheim (DE)**

(56) Entgegenhaltungen:
**EP-A- 1 298 849**
**EP-A1- 0 503 212**
**EP-A2- 0 399 491**
**WO-A1-03/056764**
**US-A- 4 237 553**
**US-A- 5 499 247**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 002 607 B1

## Beschreibung

Die Erfindung betrifft ein Verfahren und ein System zur Echtzeitdatenübertragung zwischen seriell miteinander verketteten Modulen, insbesondere zwischen Messgerätemodulen.

Feldbusse (Fieldbus) beziehungsweise Prozessnetze dienen zur Echtzeitdatenübertragung zwischen Aktoren und Sensoren, insbesondere im Bereich der Automatisienungstechnik. Dabei müssen die Daten über den Feldbus innerhalb einer festgelegten Zeitspanne garantiert übermittelt werden, so dass Feldbusse eine hohe Anforderung an die Latenzzeit zur Datenübertragung stellen. Zunehmend wird auch Ethernet als Feldbus eingesetzt, wobei ein breiter Einsatz von Datenübertragungsprotokollen aus der TCP/IP-Protokollfamilie angestrebt wird. Der Ethernet-Standard definiert verschiedene Datenübertragungsgeschwindigkeiten, beispielsweise Ethernet-Netzwerke mit Datenübertragungsgeschwindigkeiten von 10 Mbit pro Sekunde, 100 Mbit pro Sekunde und 1 Gbit pro Sekunde. Weiterhin existieren Ethernet-Netzwerke, bei denen die Daten drahtlos über Funk übertragen werden. Diesen Ethernet-Standards gemeinsam ist die Entkopplung der physikalischen Datenübertragung und der Protokollschicht, welche angibt, wie die jeweiligen Datenpakete zusammengesetzt sind. Die physikalische Datenübertragung wird realisiert durch Halbleiter ICs und eine entsprechende Verkabelung der miteinander verbundenen Geräte beziehungsweise Module. Die Protokollschicht ist für alle Übertragungsarten identisch. Die Protokollschicht umfasst bei Ethernet wiederum eine Fülle verschiedener Datenübertragungsprotokolle, wie beispielsweise TCP/IP, FTP, HTTP. Üblicherweise setzt ein Mikroprozessor die Datenpakete entsprechend dem gewünschten Datenprotokoll zusammen und sendet diese an die physikalische Datenübertragungseinheit. Im Bereich der Echtzeitdatenübertragung, insbesondere bei der Messdatenerfassung im industriellen Bereich zur Steuerung von Maschinen bzw. Anlagen, bei der es auf eine Vorhersagbarkeit der Datenübertragung ankommt, ist Ethernet als Transportmedium bisher noch nicht weit verbreitet. Ethernet ist aufgrund der Verwendung von Switches und des TCP/IP bzw. UDP-Protokolls bezüglich einer Echtzeit-Fähigkeit wenig deterministisch und weist einen größeren Jitter auf als herkömmliche Feldbus-Systeme.

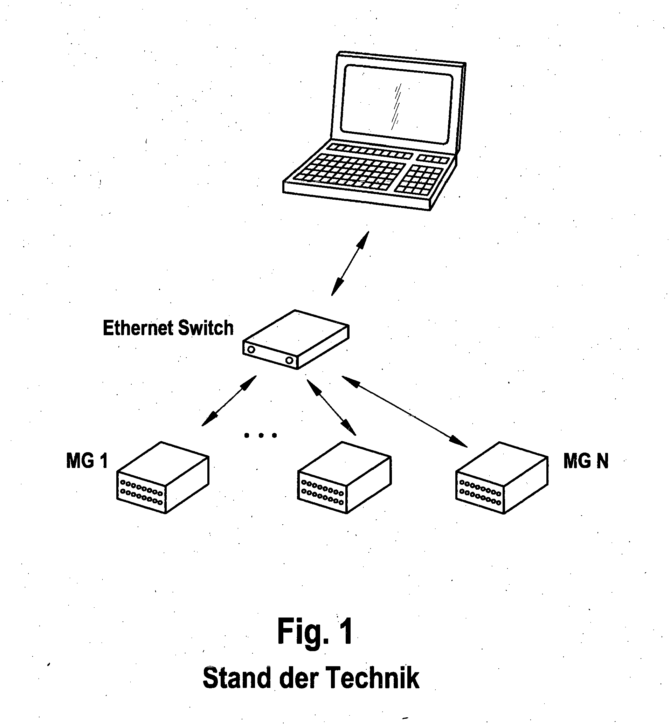

Figur 1 zeigt eine Ethernet-Topologie nach dem Stand der Technik. Dabei sind mehrere Messgeräte MG über einen Ethernet-Switch an eine Datenverarbeitungseinheit, beispielsweise einen PC, angeschlossen. Der Ethernet-Switch stellt einen Multiplexer dar, der die Daten auf dem Ethernet analysiert und entsprechend weiterleitet. Wenn mehrere Messgeräte gleichzeitig Daten in Richtung hin zu dem PC senden kommt es zu Kollisionen, die der Ethernet-Switch nur teilweise ausgleichen kann. Es kann dabei nicht sichergestellt werden, dass Messdaten, welche von dem Messgerät MG hin zu dem Ethernet-Switch übertragen werden, auch bei dem ersten Datenübertragungsversuch an dem PC ankommen. Bei einer auftretenden Kollision werden die Daten von dem Messgerät MG erneut gesendet. Dabei ergibt sich eine unbekannte Verzögerungszeit zwischen dem Entstehen der Daten in dem Messgerät MG und der Ankunft der Daten an dem PC. Diese unbekannte Verzögerungszeit hängt davon ab, wie viele Messgeräte MG an dem Ethernet-Switch angeschlossen sind und welches Datenaufkommen die einzelnen Messgeräte MG zu den verschiedenen Zeitpunkten haben. Da unter Umständen ein erneutes Senden der Daten durch das Messgerät MG erforderlich ist, müssen die Messdaten ferner zwischengespeichert werden. Die in Figur 1 dargestellte, sternförmige Topologie hat zudem den Nachteil, dass der Verkabelungsaufwand relativ groß ist.

Bei herkömmlichen Ethernet-Datenübertragungssystemen zur Übertragung von Echtzeitdaten werden Kollisionen dadurch vermieden, dass der PC die Echtzeitdaten bzw. die Messdaten von den einzelnen Messgeräten MG in einem sog. Handshake-Verfahren anfordert. Hierfür ist in den verschiedenen Messgeräten MG ein entsprechender Datenspeicher und eine entsprechende Datenverwaltung vorgesehen. Der Nachteil einer Datenübertragung nach einem Handshake-Verfahren besteht allerdings darin, dass die von dem Ethernet zur Verfügung gestellte Bandbreite nicht voll ausgenutzt werden kann, da entweder Daten von dem PC zu einem Messgerät MG gesendet werden, oder umgekehrt Daten von einem Messgerät MG hin zu dem PC. Die Daten werden somit in einem Halbduplex-Betrieb übertragen. Dies führt dazu, dass die Datenübertragungszeiten bzw. Transportzeiten bei derartigen herkömmlichen Ethernet-Feldbussystemen nicht minimal sind und stark von der Anzahl der verschalteten Messgeräte MG abhängen. Echtzeitanforderungen, wie insbesondere die Voraussagbarkeit der Datenübertragungszeiten und kurze Latenzzeiten, sind daher bei derartigen herkömmlichen Ethernet-Systemen nicht erfüllt.

Aus der US 4,237,553 ist eine Kommunikation zwischen einer Vielzahl von Stationen bekannt, die in einer Ringstruktur seriell miteinander verbunden sind. Dabei werden von einer Kontrollstation Rahmen-Signale erzeugt, welche den Start der jeweiligen Datenpakete anzeigen. Die EP 1 298 849 A2 zeigt ein LIN-Bussystem, bei welchem zwischen einem Master und einem Slave-Teilnehmer in abgeschlossenen Nachrichtenrahmen Informationen ausgetauscht werden, wobei der Nachrichtenrahmen neben den Informationen auch Synchronisationsinformationen enthält. In der WO 03/056764 A1 ist ein zeitgesteuertes Bussystem beschrieben, bei welchem Teilnehmer an dem Bussystem in festen, für deren Kommunikation vorgesehenen Zeitschlitzen, Informationen austauschen können, wobei jede Nachricht einen ID-Code aufweist. Das Kommunikationsnetzwerk aus der EP 0 503 212 A1 beschreibt ein Verfahren, wie der Zugriff auf ein Bussystem geregelt werden kann. Dabei wird aus Senderadresse und Empfängeradresse eine Kontrollnummer hergeleitet.

Es ist eine Aufgabe der vorliegenden Erfindung ein Verfahren und ein System zur Echtzeitdatenübertragung zu schaffen, das minimale Latenzzeiten bei der Datenübertragung aufweist.

Diese Aufgabe wird erfindungsgemäß durch ein Verfahren mit den im Patentanspruch 1 angegebenen Merkmalen gelöst.

Die Erfindung schafft ein Verfahren zum Übertragen von Daten zwischen seriellen miteinander verbundenen Modulen, wobei die Nutzdaten eines Moduls jeweils in ein von einem vorgeschalteten Modul empfangenes Datenpaket (frame), welches eine eindeutige Datenpaketnummer (frame number) aufweist, eingebettet werden, wenn ein in Abhängigkeit von der Datenpaketnummer (frame number) gebildeter Vergleichswert mit einer in dem Modul vorgesehenen Identifizierungsnummer (frame ID) übereinstimmt.

Ein Vorteil des erfindungsgemaßen Verfahrens besteht darin, dass der Verkabelungsaufwand im Vergleich zu der in Figur 1 dargestellten Sternstruktur minimiert wird.

Ein weiterer Vorteil des erfindungsgemäßen Verfahrens besteht darin, dass die Vorhersagbarkeit der Datenübertragung, das heißt der bei Datenübertragung auftretende Jitter der Latenzzeiten minimal ist

Das erfindungsgemäße Verfahren weist somit ein deterministisches Verhalten mit voiaussagbaren Latenzzeiten auf, wobei der Jitter minimal ist und vorzugsweise unter 10 Mikrosekunden liegt.

Bei einer bevorzugten Ausführungsform des erfindungsgemäßen Verfahrens wird der Veigleichswert durch eine logische Verknupfung der Datenpaketnummer (frame numbei) mit einem konfigurierbaren Maskierungswert (frame mask) gebildet.

Dies hat den Vorteil, dass durch geeignete Wahl des Maskierungswertes (frame mask) und der Identifizierungsnummer (frame ID) die Periodizität der von einem Modul übertragenen Daten eingestellt werden kann.

Bei einer bevorzugten Ausführungsform des erfindungsgemäßen Verfahrens wird die Datenpaketnummer (frame number) mit dem Maskierungswert (frame mask) logisch UND-verknüpft.

Nach einer alternativen Ausfürungsform des erfindungsgemäßen Veifahiens wird dei Vergleichswert durch die Datenpaketnummer des empfangenen Datenpakets selbst gebildet.

Bei einer weiteren Ausführungsform des erfindungsgemäßen Verfahrens wird in den Modulen jeweils mindestens eine Identifizierungsnummer gespeichert

Bei einer weiteren Ausführungsform des erfindungsgemäßen Verfahrens werden in den Modulen jeweils mindestens ein Maskierungswert (frame mask) gespeichert

Bei einer bevorzugten Ausführungsform des erfindungsgemaßen Verfahrens werden die Nutzdaten des Moduls als Nutzdaten eines Datagramms, insbesondere eines XCP-Datagramms in das empfangene Datenpaket eingebettet

Bei einer bevorzugten Ausführungsform des erfindungsgemäßen Verfahrens werden die Nutzdaten durch das Modul jeweils in das empfangene Datenpaket zur Erzeugung eines erweiterten Datenpakets eingebettet, sofern Nutzdaten in dem Modul verfügbar sind

Bei einer bevorzugten Ausführungsform des erfindungsgemäßen Verfahrens werden die Nutzdaten durch das Modul jeweils in das empfangene Datenpaket zur Erzeugung des erweiterten Datenpakets nur dann eingebettet, wenn ein in dem empfangenen Datenpaket enthaltenes Kennzeichnungsflag bzw Kennzeichnungsbit gesetzt ist

Bei einer bevorzugten Ausführungsform des erfindungsgemäßen Verfahrens wird das erweiterte Datenpaket an ein dem Modul nachgeschaltetes gleichartiges Modul gesendet.

Bei einer bevorzugten Ausführungsform des erfindungsgemäßen Verfahrens werden die Nutzdaten durch Messdaten gebildet.

Bei einer bevorzugten Ausführungsform des erfindungsgemäßen Verfahrens bilden die seriell miteinander verbundenen Module eine Modulkette, die an eine Datenverarbeitungseinheit, beispielsweise einen PC, angeschlossen ist, welche die in den Datenpaketen ubertragenen Daten verarbeitet

Bei einer bevorzugten Ausführungsform des erfindungsgemäßen Verfahrens weist das von dei Datenverarbeitungseinheit am weitesten entfernte Modul der Modulkette einen Datenpaketgenerator auf, der periodisch leere Datenpakete, die keine Nutzdaten enthalten, generiert.

Dabei wird die Frequenz $f_{FG}$ mit welcher der Datenpaketgenerator des letzten Moduls die leeren Datenpakete generiert, derart eingestellt, dass diese Frequenz höher oder gleich ist als eine maximale Messdatenrate aller Module dei jeweiligen Modulkette

Bei einer bevorzugten Ausführungsform des erfindungsgemäßen Verfahrens weisen die durch den Datenpaketgenerator generierten Datenpakete jeweils Verwaltungsdaten (Headerdaten) mit einer eindeutigen Datenpaketnummer des Datenpakets auf.

Dabei nummeriert der Datenpaketgenerator vorzugsweise die generierten leeren Datenpakete fortlaufend durch.

In einer bevorzugten Ausführungsform des erfindungsgemäßen Verfahrens werden die Module der Modulkette miteinander synchronisiert.

Bei einer bevorzugten Ausführungsform des erfindungsgemäßen Verfahrens werden die Datenpakete vollduplex über ein Übertragungsmedium übertragen.

Bei einer bevorzugten Ausführungsform des erfindungsgemäßen Verfahrens überträgt die Datenverarbeitungseinheit Datenpakete, welche Ausgabedaten oder Stelldaten als Nutzdaten enthalten, an die Module der Modulkette.

Bei einer bevorzugten Ausführungsform des erfindungsgemäßen Verfahrens erkennt jedes Modul der Modulkette anhand der Verwaltungsdaten der von der Datenverarbeitungseinheit durch das Modul empfangene Datenpakete, die für das Modul jeweils bestimmten Datenpakete und koppelt die in dem Datenpaket enthaltenen Nutzdaten aus.

Bei einer besonders bevorzugten Ausführungsform des erfindungsgemäßen Verfahrens werden die übertragenen Datenpakete durch Ethernet-Datenpakete gebildet.

Bei einer bevorzugten Ausführungsform des erfindungsgemäßen Verfahrens wird das Übertragungsmedium durch ein 100 MB-Ethernetkabel gebildet.

Die Erfindung schafft ferner ein Echtzeitdatenübertragungssystem zur Übertragung von Daten zwischen seriell miteinander verbundenen Modulen nach Anspruch 21.

Bei einer bevorzugten Ausführungsform des erfindungsgemäßen Moduls zur Echtzeitdatenübertragung weist das Modul einen ersten Transceiver zum Anschluss an ein vorgeschaltetes Modul und einen zweiten Transceiver zum Anschluss an ein nachgeschaltetes Modul sowie eine FPGA-Einheit (Field Programmable Gate Array)auf.

Dabei weist die FPGA Einheit des Moduls vorzugsweise eine Logik-Einheit auf, welche die Datenpaketnummer (frame number) eines empfangenen Datenpakets mit einem konfigurierten Maskierungswert (frame mask) zur Erzeugung eines Vergleichswertes logisch verknüpft.

Bei einer bevorzugten Ausführungsform des erfindungsgemäßen Moduls zur Echtzeitdatenübertragung weist die FPGA-Einheit des Moduls ein erstes Register zum Speichern eines zugehörigen konfigunerbaren Maskierungswertes (frame mask) und ein zweites Register zum Speichern einer zugehörigen konfigurierbaren Identifizierungsnummer (frame ID) auf

Bei einer bevorzugten Ausführungsform des erfindungsgemäßen Moduls zur Echtzeitdatenübertragung vetknüpft die in dei FPGA-Einheit vorgesehene Logik-Einheit den gespeicherten Maskierungswert (frame mask) mit der Datenpaketnummer (frame number) des empfangenen Datenpakets bitweise zur Erzeugung eines Vergleichswertes logisch UND

Bei einer bevorzugten Ausführungsform des erfindungsgemäßen Moduls zur Echtzeitdatenübertragung weist die FPGA-Einheit eine Vergleichseinheit auf, die den von der Logik-Einheit erzeugten Vergleichswert mit der gespeicherten Identifizierungsnummer (frame ID) vergleicht

Bei einer bevorzugten Ausführungsform des erfindungsgemäßen Moduls weist die FPGAEinheit eine Recheneinheit auf, die über einen ersten Media Access-Controller (MAC) an einen ersten Transceiver und über einen zweiten Media Access Controller (MAC) an einen zweiten Transceiver angeschlossen ist.

Im Weiteren werden bevorzugte Ausführungsformen des erfindungsgemäßen Verfahrens nach Anspruch 1 und des erfindungsgemäßen Echtzeitdatenübertragungssystems nach Anspruch 21 unter Bezugnahme auf die beigefügten Figuren zur Erläuterung erfindungswesentlicher Merkmale beschrieben.

Es zeigen:

| | |
|---|---|
| Figur 1 | ein Ethernet-Feldbussystem nach dem Stand der Technik; |
| Figur 2 | ein Blockdlagt amm einer möglichen Ausführungsform des erfindungsgemäßen Echtzeitdatenübertragungssystems mit mehreren seriell miteinander verketteten Modulen, |
| Figur 3 | ein Blockschaltbild einer möglichen Implementierung emes erfindungsgemäßen Moduls zur Echtzeitdatenverarbeitung; |
| Figur 4 | ein Blockdiagramm zur Erläuterung der Funktionsweise des erfindungsgemäßen Echtzeitdatenverarbeitungssystems; |
| Figur 5 | Datendiagramme zur Erläuterung dei bei einer bevorzugten Ausführungsform des erfindungsgemäßen Verfahrens eingesetzten Ethernet-Datenpakete zur Übertragung von Messdaten zu einer Datenverarbeitungseinheit, |
| Figur 6 | ein Datendiagramm zur Erläuterung des erfindungsgemäßen Zeitschlitzverfahrens zur Echtzeitdatenübertragung; |
| Figur 7 | ein Ablaufdiagramm einer möglichen Ausführungsform des erfindungs gemaßen Verfahrens zur Datenübertragung zwischen seriell miteinander verbundenen Modulen, |
| Figuren 8a, 8b, 8c | Beispiele zur Verdeutlichung einer Zuteilung von Zeitschlitzen bei dem erfindungsgemäßen Verfahren zur Echtzeitdatenübertragung; |

Figur 9 ein Beispiel einer möglichen Realisierung einer Zeitscheibenzuteilung gemäß dem erfindungsgemäßen Verfahren für fünf bit breite Maskierungswerte, und

Figur 10 eine Auswahl der in Figur 9 dargestellten Maskierungswerte zur Verdeutlichung der Einstellung einer Penodizitat bei der Zeitscheibenzuteilung gemäß dem erfindungsgemaßen Verfahren zur Echtzeltdatenübertragung

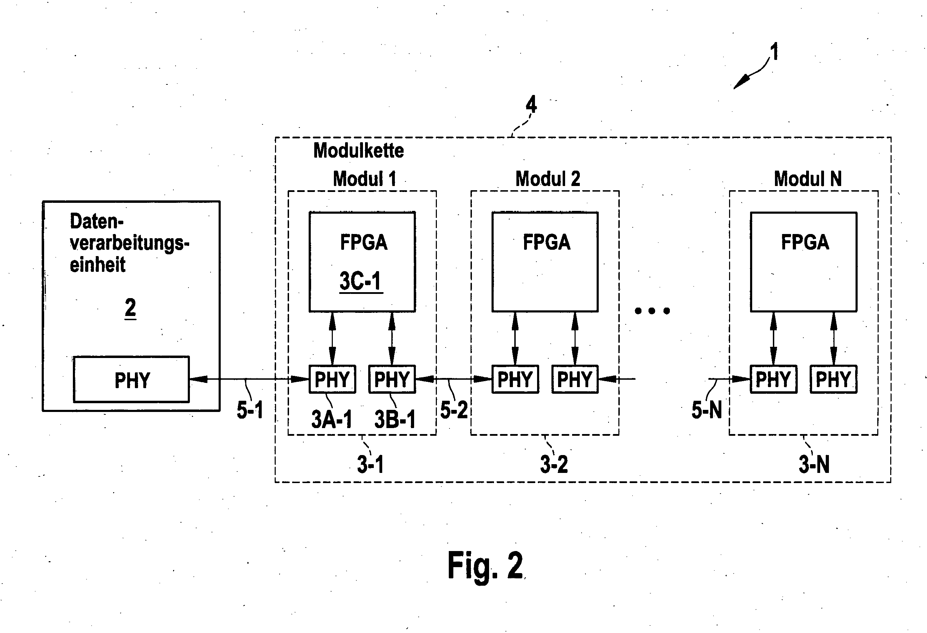

Wie man aus Figur 2 erkennen kann, umfasst ein erfindungsgemaßes Echtzeitdatenübertragungssystem 1 mindestens eine Datenverarbeitungseinheit 2 an die eme aus Modulen 3 bestehende Modulkette 4 anschließbar ist Die Modulkette 4 umfasst N-seriell miteinander verbundene Module 3. Bei den Modulen 3 handelt es sich um beliebige Module bzw um Messgetate, die Echtzeitmessdaten liefern Die Module 3 sind über ein Kabel 5 miteinander veikettet, wobei das erste Modul 3-1 dei Modulkette 4 über ein Kabel 5-1 an die Datenvetarbeitungseinheit 2 angeschlossen ist Bei dem Datenübertragungsmedium bzw. Kabel 5-i handelt es sich um ein beliebiges Datenübertragungskabel. Bei einer alternativen Ausführungsform erfolgt die Datenübertragung zwischen den Modulen drahtlos Bei der in Figur 2 dargestellten Ausführungsform enthält jedes Modul 3 zwei Transceiver PHY zur Datenübertragung Ferner enthält jedes Modul eine FPGA-Einheit (FPGA: Field Programmable Gate Array)

Bei den Transceivern PHY handelt es sich vorzugsweise um Transceiver zur Übertragung von Ethernet-Datenpaketen. Einer der beiden Ethernet-Transceiver wird in Richtung zur Datenverarbeitungseinheit 2 an ein benachbartes Modul dei Modulkette 4 angeschlossen An den anderen Ethernet-Transceiver kann ein weiteres Modul zur Erweiterung der Modulkette 4 angeschlossen werden Die Modulkette 4 ist beliebig erweiterbar. Ferner kann die Modulkette 4 in beliebige Netztopologien eingebaut bzw. verschaltet werden.

Bei der Datenverarbeitungseinheit 2 handelt es sich üblicherweise um einen PC. Die Datenverarbeitungseinheit 2 bzw. Mastereinheit hat Zugriff auf den aus den Modulen 3 bestehenden Geräteverbund, der sich aus der Sicht dei Mastereinheit 2 als ein Ethernet-Gerät mit einer MAC-Adresse darstellt. Die Datenpakete werden zwischen den Modulen 3 und zwischen der Modulkette 4 und der Datenverarbeitungseinheit 2 vollduplex, das heißt in zwei voneinander unabhängigen Kommunikationsrichtungen, übertragen. Das letzte Modul 3-N dei Modulkette 4 erzeugt zyklisch leere Datenpakete Hierzu enthält die FPGA-Einheit des letzten Moduls 3-N einen Datenpaketgenerator, der periodisch leere Datenpakete, die keine Nutzdaten enthalten, generiert. Die Datenpakete enthalten lediglich Verwaltungsdaten (Header Daten) mit einer jeweils eindeutigen Datenpaketnummer des Datenpakets. In einer bevorzugten Ausführungsform werden die Zeitscheiben bzw die Datenpakete auf dem Datenpaket fortlaufend durchnumeriert, so dass sich bei einer 16 bit breiten Datenpaketnummer Datenpaketnummern zwischen 0 bis 65 535 eingeben Die Frequenz mit welcher der Datenpaketgenerator Datenpaketnummern n generiert, ist vorzugsweise einstellbar. Dabei wird die Frequenz $f_{FG}$ mit den leeren Datenpaketen durch den Datenpaketgenerator des letzten Moduls 3-N generiert werden, derart eingestellt, dass sie gleich oder höher ist als die höchste vorkommende Messdatemate in den Modulen 3 der Modulkette 4 Pro Zeitscheibe wird durch den Datenpaketgenerator ein leeres Ethernet-Datenpaket ohne Nutzdaten generiert.

Das generierte Datenpaket wird von dem letzten Modul 3-N der Modulkette 4 hin m Richtung zu der Datenverarbeitungseinheit 2 über das nächste gleichartige Modul 3-(N-1) übertragen. Das übertragene Datenpaket weist eine eindeutige Datenpaketnummer (frame number) auf In Abhängigkeit von der Datenpaketnummer bildet das nächste Modul einen Vergleichswert und prüft ob der gebildete Vergleichswert mit einer m dem Modul 3-(N-1) ebenfalls vorgesehenen Identifizierungsnummer (frame ID) übereinstimmt. Ist dies der Fall, werden die in dem jeweiligen Modul verfügbaren Echtzeitdaten in das empfangene Datenpaket zur Erzeugung eines erweiterten Datenpakets eingebettet, wählend dieses an das nachfolgende Modul übertragen wird. Die Modulkette 4 überträgt selbstständig die derart gebildeten erweiterten Datenpakete nach außen, die beispielsweise durch einen PC 2 empfangen werden, ohne dass die Modulkette 4 Steuerbefehle von dem PC 2 erhalten muss Aus der Sicht der Modulkette 4 ist der Datenempfangssignalpfad vollständig unabhängig von dem Datensendesignalpfad und steht somit mit seiner kompletten Bandbreite beispielsweise zur Übertragung von Stellsteuersignalen an entsprechende Module 3 der Modulkette 4 zur Verfügung. Da die Module 3 die zu übertragende Echtzeitdaten von sich aus ohne Anforderung an die Datenverarbeitungseinheit 2 senden, ist in den erfindungsgemäßen Modulen 3-i jeweils kein Datenspeicher und auch keine damit verbundene Speicherverwaltung notwendig Die in den Modulen 3 jeweils vorhandene Logik wird vorzugsweise durch eine FPGA-Einheit (Field Programmable Gate Anay) realisiert Hierdurch werden minimale Latenzzeiten für den Datentransport erreicht. Jedes Modul 3 der Modulkette 4 besteht wenigstens aus einem ersten und zweiten Transceiver 3A, 3B sowie aus einer FPGA-Einheit 3C.

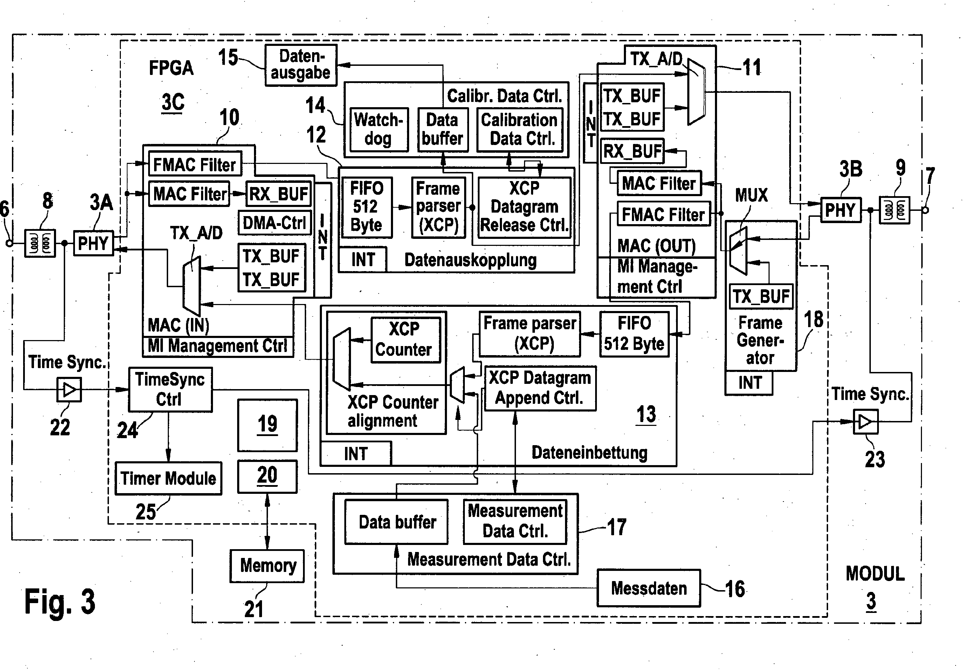

Figur 3 zeigt eine bevorzugte Implementierung einer FPGA-Einheit 3C innerhalb eines erfindungsgemaßen Moduls 3. Das Modul 3-i weist einen Anschluss 6 zum Anschluss an ein nachgeschaltetes Modul 3i-1 und einen zweiten Anschluss 7 zum Anschluss an ein vorangeschaltetes Modul 3i+1 auf

Die beiden Anschlüsse 6 und 7 sind über Transformatoren 8,9 an die in dem Modul 3 vorgesehenen beiden Ethernet-Transceiver 3A, 3B angeschlossen. Der Transceiver 3A wird über den Anschluss 6 in Richtung auf die Datenverarbeitungseinheit 2 angeschlossen, während der Transceiver 3B über den Anschluss 7 an weitere vorangeschaltete Module 3 der Modulkette 4 angeschlossen ist In der FPGA-Einheit 3C des Moduls 3 sind zwei Media Access Controller (MAC) 10, 11 vorgesehen. Die Media Access Controller 10, 11 steuern den Zugnff auf das Übertragungsmedium. Hierfür sind die beiden Media Access Controller 10, 11 Jeweils an die beiden Ethernet-Transceiver 3A, 3B angeschlossen. Zwischen den beiden Media Access Controller 10, 11 ist eine Datenauskopplungseinheit 12 zum Auskoppeln von Nutzdaten und eine Dateneinbettungseinheit 1 zum Einkoppeln von Nutzdaten vorgesehen Die von dem Media Access Controller 10 kommenden Datenpakete werden durch die Datenauskopplungseinheit 12 unverändert an den Media Access Controller 11 durchgeschleust. In der Datenauskopplungsein-heit 12 befindet sich em FIFO-Datenspeicher, der zum Zwischenspeichern der von dem Media Access Controller 10 ankommenden Datenpakete verwendet werden kann Ein Frame Parser (XCP) in der Datenauskopplungseinheit 12 analysiert die empfangenen Datenpakete und entnimmt Nutzdaten, welche für das Modul 3 bestimmt sind. Beispielsweise koppelt der XCP-Frame Parser XCP-Datagramme, die in den empfangenen Ethernet-Datenpaketen eingebettet sind, aus, und speichert sie in einem Ausgabezwischenspeicher 14 ab Die Kriterien bzw Parameter, die angeben, welche XCP-Datagramme welchem Modul 3 zugeordnet sind, werden der Datenauskopplungseinheit 12 von einem Mikroprozessor 19 der FPGA-Einheit 3C über ein internes Interface INT mitgeteilt. Bei dem Mikroprozessor 19 handelt es sich beispielsweise um einen NIOSII-Prozessor der Firma Altera. Dieser NIOSII-Prozessor 19 übernimmt dabei alle wesentlichen Konfigurationsaufgaben. Die von dei Datenauskopplungseinheit 12 ausgekoppelten Nutzdaten werden in dem Ausgabezwischenspeicher 14 zwischengespeichert und anschließend über ein Datenausgabeinterface 15 des Moduls 3 ausgegeben

Zwischen dem Media Access Controller 10 und dem Media Access Controller 11 ist ferner eine Dateneinbettungseinheit 13 vorgesehen Datenpakete, die von dem Media Access Controller 11 an die Dateneinbettungseinheit 13 geliefert werden, werden durch einen Frame Parser (XCP) innerhalb der Dateneinbettungseinheit 13 analysiert. Sofern Nutzdaten bzw Messdaten vorhanden und weitere Kriterien erfüllt sind, werden die Nutzdaten durch die Dateneinbettungseinheit 13 in die empfangenen Datenpakete eingebettet bzw. an diese angehängt Das Modul 3i bettet seine Nutzdaten in ein von dem vorgeschalteten Modul 3i+1 empfangenen Datenpaket bzw Datenrahmen ein, wenn ein in Abhängigkeit von der Datenpaketnummer (frame number) gebildeter Vergleichswert mit einer in dem Modul 3i vorgesehenen Identifizierungsnummer (frame ID) übereinstimmt. Die über ein Dateninterface 16 eingegebenen Nutzdaten werden in einem Nutzdatenzwischenspeicher 17 zwischengespeichert und bei Übereinstimmung des Vergleichswerts mit der Datenpaketnummei an das jeweilige Datenpaket angehängt bzw dann eingebettet.

Die FPGA-Einheit 3C enthält ferner einen Datenpaketgenerator 18, der über einen dann enthaltenen Multiplexer als Alternative zum Transceiver 3B an den Media Access Controller 11 angeschlossen werden kann Nur in dem letzten Modul 3-N der Modulkette 4 wird der Datenpaketgenerator 18 zugeschaltet, das heißt, der in Figur 3 dargestellte Multiplexer innerhalb des Datenpaketgenerators 18 wird umgeschaltet. Der Media Access Controller 11 des letzten Moduls 3-N der Modulkette 4 erhält daher nicht mehr Datenpakete von außen über den Anschluss 7, sondern erhält Datenpakete, die durch den Datenpaketgenerator 18 des letzten Moduls 3-N generiert werden Der Datenpaketgenerator 18 erzeugt leere Datenpakete, die keine Nutzdaten enthalten Die Datenpakete enthalten jeweils nur Verwaltungsdaten bzw Header Daten und werden mit einer einstellbaren Frequenz durch den Datenpaketgenerator 18 des letzten Moduls 3-N erzeugt. Die in den leeren Datenpaketen enthaltenen Verwaltungsdaten umfassen eine eindeutige Datenpaketnummer, die vorzugsweise fortlaufend durchnumeriert wird. Der Datenpaketgenerator 18 wird vorzugsweise durch den NIOS-II -Prozessor 19 konfiguriert Der Datenpaketgenerator 18 erzeugt dabei vorzugsweise zyklisch vollständige UDP-IP-Ethernet Frames, die keine Nutzdaten enthalten

Das Modul 3 enthält neben dem NIOS-II Mikroprozessor 19 eine Speicheisteuerung 20 zum Anschluss eines Datenspeichers 21 In einer bevorzugten Ausführungsform sind zur Synchronisierung Synchronisierungseinheiten 22 und 23 sowie eine Synchronisierungssteuerung 24 an Zeitmodule 25 anschließbar. Der Mikroprozessor 19 ist über interne Interfaces INT mit den beiden Media Access Controllern 10, 11 der Datenauskopplungseinheit 12 sowie der Dateneinbettungseinheit 13 verbunden.

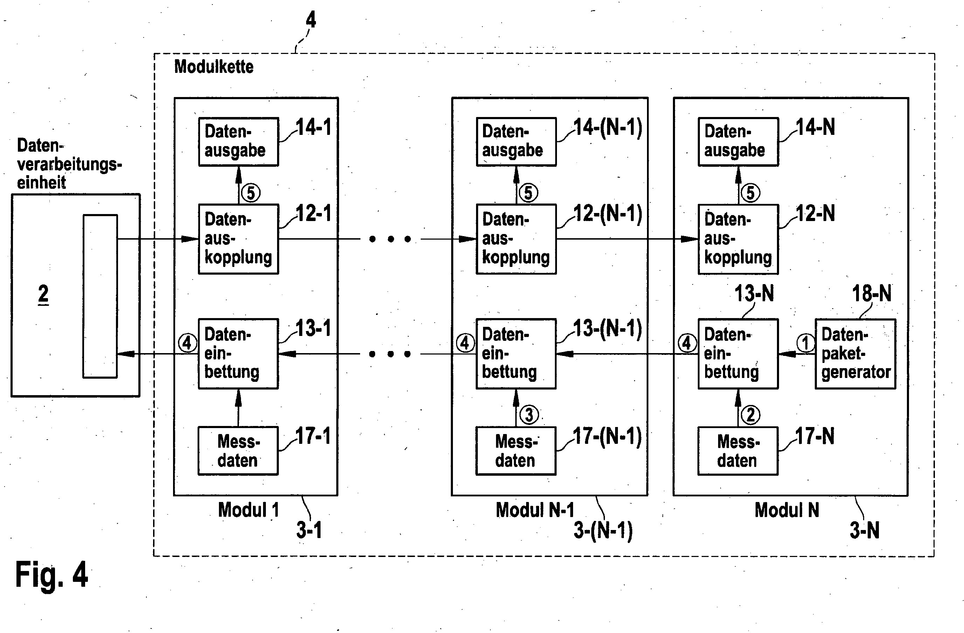

Figur 4 zeigt schematisch die wesentlichen Komponenten des erfindungsgemäßen Echtzeitdatenübertragungssystems Jedes der Module 3 weist jeweils eine Datenauskopplungseinheit 12 und eine Dateneinbettungseinheit 13 auf Lediglich in dem letzten Modul 3-N der Modulkette 4 ist der Datenpaketgenerator 18-N aktiviert. Der Datenpaketgenerator 18-N genenert leere Datenpakete ohne Nutzdaten zyklisch mit einer vorgegebenen Frequenz.

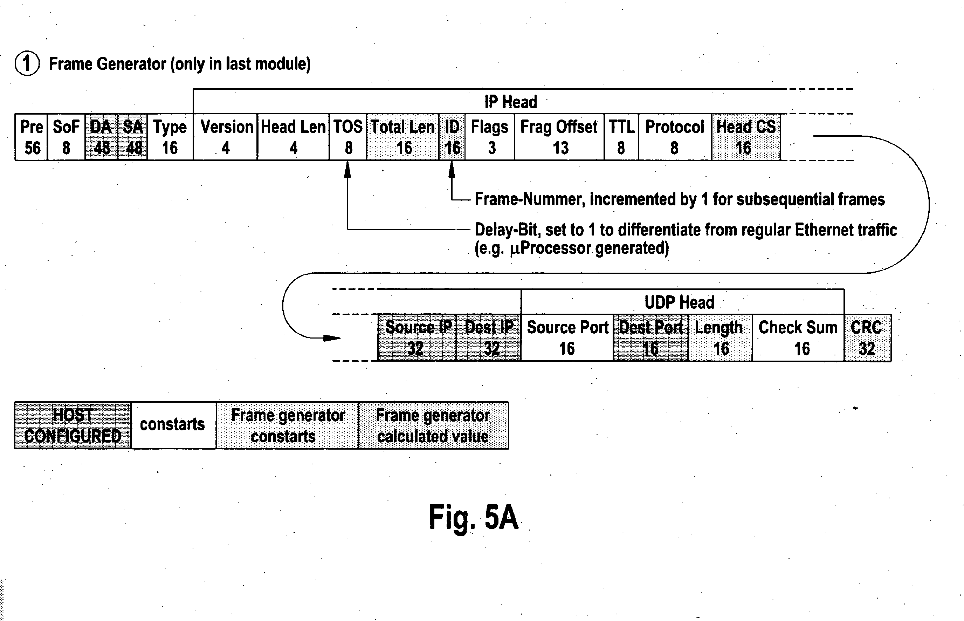

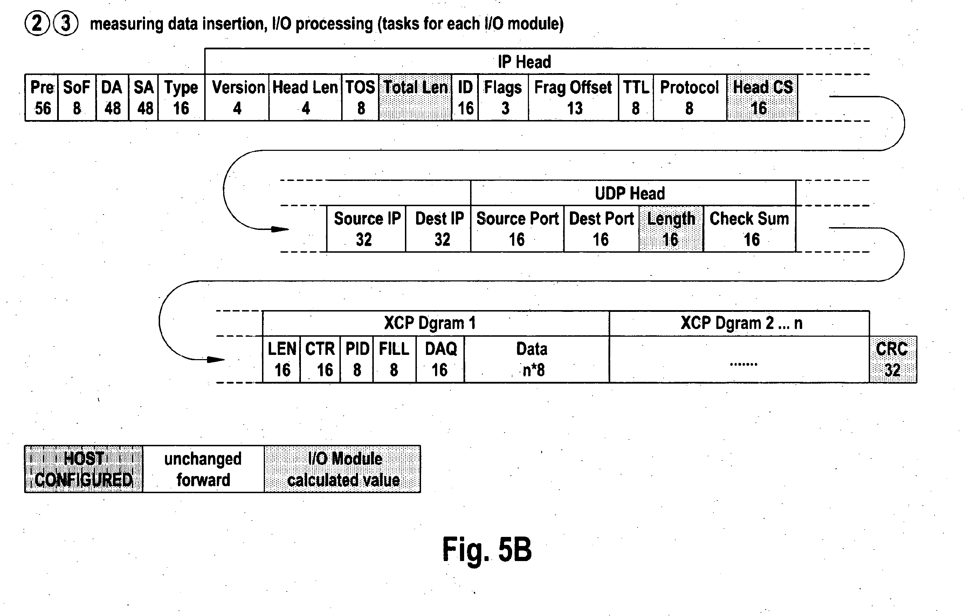

Figur 5 zeigt den Aufbau von UPD/IP-Ethernet Datenpaketen in einer bevorzugten Ausführungsform des erfindungsgemaßen Verfahrens an verschiedenen Stellen der Modulkette 4, wie sie in Figur 4 dargestellt ist. Die in den jeweiligen Kastchen angegebenen Zahlen geben die Bitbreite des jeweiligen Datenbitfeldes an

Wie in Figur 5a dargestellt, erzeugt der Datenpaketgenerator 18-N das dort dargestellte UDP/IP-Datenpaket ohne Nutzdateninhalt. Ein solches Datenpaket bzw Datenrahmen (frame) besteht aus Ethernet-Infotmationen (Pre, SOF, DA, SA, Type und CRC) einem IP Header bzw. IP Verwaltungsdaten, und einem UDP Header bzw. UDP Verwaltungsdaten. Der Aufbau von dem Ethernetdatenpaket ist beispielsweise im Standard IEEE802.3 bzw RFC 791 für IP und RFC 768 für UDP unter www. rfc.net angegeben. Die IP-Verwaltungsdaten enthalten eine Datenpaketnummer (frame ID) die 16 Bit umfasst Die Datenpaketnummer wird beispielsweise bei jedem neugenenierten Datenpaket durch den Datenpaketgenerator 18-N um eins inkrementiert. Dadurch werden die Datenpaketnummern fortlaufend nummeriert, wobei die Anzahl der verschiedenen Datenpakete so groß ist, dass die Datenpaketnummer jeweils eindeutig vergeben wird. Die Frequenz mit welcher der Datenpaketgenerator 18-N die leeren Datenpakete erzeugt ist vorzugsweise durch den Prozessor 19 des Moduls einstellbar und beträgt beispielsweise 10 Kilohertz. Die Frequenz $f_{FG}$ mit welcher der Datenpaketgenerator 18-N die leeren Datenpakete generiert, mindestens so hoch wie die höchste Messdatenrate innerhalb der Modulkette 4. Die eingestellte Frequenz $f_{FG}$ gibt den zeitlichen Abstand zwischen zwei Datenpaketen bzw Frames an Abhängig von der Wahl bzw dieser Frequenz $f_{FG}$ ist die Menge an Nutzdaten, die von Modulen 3 innerhalb der Modulkette 4 an ein Datenpaket angehängt bzw darin eingebettet werden kann Der zeitliche Abstand zwischen zwer Datenpaketen bzw deren Periodizität errechnet sich zu

$$T_{FRAME} = \frac{1}{f_{FG}}$$

Während dieser Zeit kann bei 100 Mbit Ethernet mit einer Bitdauer von 10 Nanosekunden pro Bit maximal die folgende Anzahl von Bits inklusive IP/UDP Header übertragen werden:

$$\text{Bits Per Frame}_{max} = \frac{T_{FFRAME}}{10ns/bit}$$

Ein leeres Datenpaket, wie es von dem Datenpaketgenerator 18-N erzeugt wird, besteht einschließlich der zwischen zwei Datenpaketen vorzusehenden Lücke IFG (interframe gap) aus 528 Bits. Zur Übertragung einzelner, nicht zeitgesteuerter Datenpakete wird zwischen zwei Datenpaketen bzw. Frames Zeit reserviert, beispielsweise zur Übertragung von 1000 Bit. Dadurch ergibt sich eine maximale Anzahl von Nutzdatenbits, die an einen Frame bzw. an ein Datenpaket angehängt weiden können:

$$\text{NutzBits}_{max} = \text{Bits Per Frame}_{max} - 528 - 1000$$

Dies bedeutet, dass, wenn man die Anzahl von Bits aller angehängten bzw eingebetteten Nutzdaten bzw XPC-Datagramme, die durch Module 3 der Modulkette 4 an das genenerte Datenpaket angehängt werden, zusammenaddiert, diese Summe den oben angegebenen Wert Nutzbits max nicht überschreiten darf Dies wird im erfindungsgemaßen Datenübertragungssystem durch eine geeignete Wahl von Maskierungswerten und Identifizierungsnummern in den Modulen 3 sichergestellt Bei einer bevorzugten Ausführungsform des erfindungsgemaßen Verfahrens werden Nutzdaten durch ein Modul 3 jeweils in ein empfangenes Datenpaket zur Erzeugung eines erweiterten Datenpakets nur dann eingebettet, wenn in dem empfangenen Datenpaket ein Kennzeichnungsflag gesetzt ist Dieses Kennzeichnungsflag wird vorzugsweise durch ein Bit in dem TOS-Feld des IP Headers gebildet Bei diesem Bit handelt es sich beispielsweise um das sog Delay-Bit in dem TOS-Feld des IP Headers. Anhand des Kennzeichnungsflags bzw, des gesetzten Delay-Bits unterscheiden die Dateneinbettungseinheiten 13 der nachgeschalteten Module 3, ob es sich ber dem empfangenen Datenpaket um Datenpakete zur Aufnahme von Messdaten oder um sonstige Ethernet-Datenpakete handelt, beispielsweise um Ethernet-Datenpakete, die von einem Mikroprozessor 19 generiert werden. Der Datenpaketgenerator 18-N erhöht mit jedem erzeugten Datenpaket ein Wert in dem ID-Datenfeld 1 und berechnet automatisch die Checksummendatenfelder Head-CS und CRC Die derart erzeugten Datenpakete durchlaufen auf Ihrem Weg hin zu der Datenverarbeitungseinheit 2 alle Dateneinbettungseinheiten 13-i der in der Modulkette 4 vorgesehenen Module 3.

Die Figur 5b verdeutlicht das Einbetten bzw das Anhängen von Nutzdaten in ein empfangenes Datenpaket Jede Dateneinbettungseinheit 13 enthält ein erstes Register zum Speichern eines konfigurierbaren Maskierungswertes (fiame mask) und ein zweites Register zum Speichern einer konfigunerbaren Identifizirerungsnummer (frame ID) Beide Werte haben vorzugsweise eine Bitbreite von 16 Bit.

In einer bevorzugten Ausführungsform des erfindungsgemäßen Verfahrens werden Messdaten für ein empfangenes Datenpaket durch ein Modul 3 eingebettet bzw angehängt, wenn die folgenden die Bedingungen erfüllt sind

Zunächst wird durch die Dateneinbettungseinheit 13 geprüft, ob Nutzdaten bzw Netzdaten an dem Modul 3 verfügbar bzw vorhanden sind.

Anschließend prüft die Dateneinbettungseinheit 13 ob das Kennzeichnungsflag innerhalb des empfangenen Datenpakets gesetzt ist Hierzu prüft die Dateneinbettungseinheit beispielsweise, ob das Delay-Bit in dem TOS-Feld des IP Headers des empfangenen Datenpakets gesetzt ist.

Anschließend führt die Dateneinbettungseinheit eine logische Verknüpfung der in dem empfangenen Datenpaket empfangenen Datenpaketnummer (frame number) mit dem gespeicherten Maskierungswert durch, um einen Vergleichswert zu erzeugen Vorzugsweise wird die Datenpaketnummer (frame Number) mit dem Maskierungswert (frame Mask) zur Bildung eines Vergleichswertes logisch UND verknüpft.

$$\text{(frame Mask) AND (frame Number)} = \text{frame ID}'$$

Dei somit gebildete Vergleichswert frame ID wird anschließend der in dem Modul gespeicherten Identifizierungsnummer (frame ID) verglichen, und es wird geprüft, ob die beiden Werte übereinstimmen. Stimmen der logisch erzeugte Vergleichswert (frame ID') und die in dem Modul gespeicherte Identifizieeungsnummer (frame ID) überein, würden die verfügbaren Nutzdaten des Moduls 3 an das zu empfangende Datenpaket zur Erzeugung eines erweiterten Datenpakets angehängt bzw. dann eingebettet.

Vorzugsweise werden die Nutzdaten wie m Figur 5b dargestellt als vollständiges XCP-Datenpaket in das Ethernet-Datenpaket eingebettet Das XCP-Datagramm besteht aus den Feldem LEN, CTR, PID, FILL, DAQ sowie den Nutzdaten (data) Die Dateneinbettungseinheit 13 rechnet in Echtzeit ferner die Werte für die Felder Total LEN, Head CS in dem IP Header sowie Length im UDP Header und im Ethernet-CRC aus. Bei den Konfiguration der Identifizierungsnummer (frame ID) und des Maskierungswertes (frame mask) in der Dateneinbettungseinheit 13 kann für jedes Modul 3 Platz für Mess- bzw Nutzdaten in den Ethemet-Datenpaketen reserviert werden. Durch die Wahl der Maskierungswerte und der Identifizierungsnummer (frame ID) ergeben sich verschiedene Möglichkeiten für die Reservierung der zur Verfügung stehenden Bandbreite in den Datenpaketen

Das Anhängen bzw. Einbetten von Daten erfolgt sukzessive in jedem Modul 3 jeder Modulkette 4

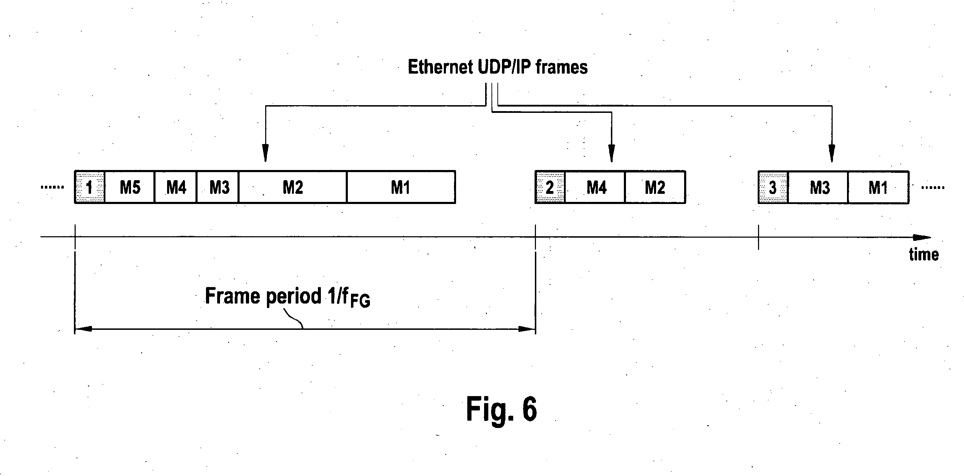

Figur 6 zeigt schematisch eine Reservierung von Zeitschlitzen in dem erfindungsgemaßen Verfahren zur Echtzeitdatenübertragung. Der Datenpaketgenerator 18-N des letzten Moduls 3-N der Modulkette 4 erzeugt zyklisch bzw periodisch leere UDP/IP Ethernet Datenpakete, wobei die Periode derart eingestellt ist, dass alle Module 3 der Modulkette 4 in der Lage sind, Mess- bzw. Nutzdaten in einem ausreichenden Umfang in ein empfangenes Ethernet-Datenpaket einzubetten Durch die Wahl der Maskierungswerte und der Identifizierungsnummer (fiame ID) kann für die unterschiedlichen Module 3 eine unterschiedliche Bandbreite reserviert weiden Die Bandbreite wird beispielsweise in Abhängigkeit von der Bedeutung bzw der Priorität der zur Verfügung gestellten Nutzdaten reserviert. Bei dem in Figur 6 dargestellten Beispiel ist der Umfang der durch die Module M1 und M2 angehängten Nutzdaten größer als dei Umfang bzw das Volumen der Nutzdaten der Module M3, M4 und M5 Da jedes Ethernet-Datenpaket eine eindeutige Datenpaketnummer aufweist, andert sich die logische Verknüpfung mit dem konfigurierten Maskierungswert (frame mask) bei jedem empfangenen Datenpaket Durch geeignete Wahl der Maskierungswerte (frame mask) und der Identifizierungsnummer (frame ID) lasst sich ein variables Zeitschlitzschema realisieren. Die Zeitbasis für die Taktung der Messdatenerfassung wird vorzugsweise in den Messgeräten bzw Modulen 3-i erzeugt. Das erfindungsgemäße Verfahren setzt nicht voraus, dass die Module 3-i miteinander zeitlich synchronisiert sind, das heißt, dass die lokale Zeitbasis für alle Module 3 exakt gleich läuft. Allerdings ist eme Synchronisierung der jeweiligen lokalen Zeitbasen vorzugsweise vorgesehen, damit Messdaten von verschiedenen Modulen 3 zeitlich einander zugeordnet weiden können. Eme Synchronisierung stellt sicher, dass die lokalen Zeitbasen der Module 3 über die Betriebszeit hinweg nicht auseinanderlaufen. Dei maximale absolute Unterschied der lokalen Zeitbasen beträgt vorzugsweise weniger als eine Mikrosekunde.

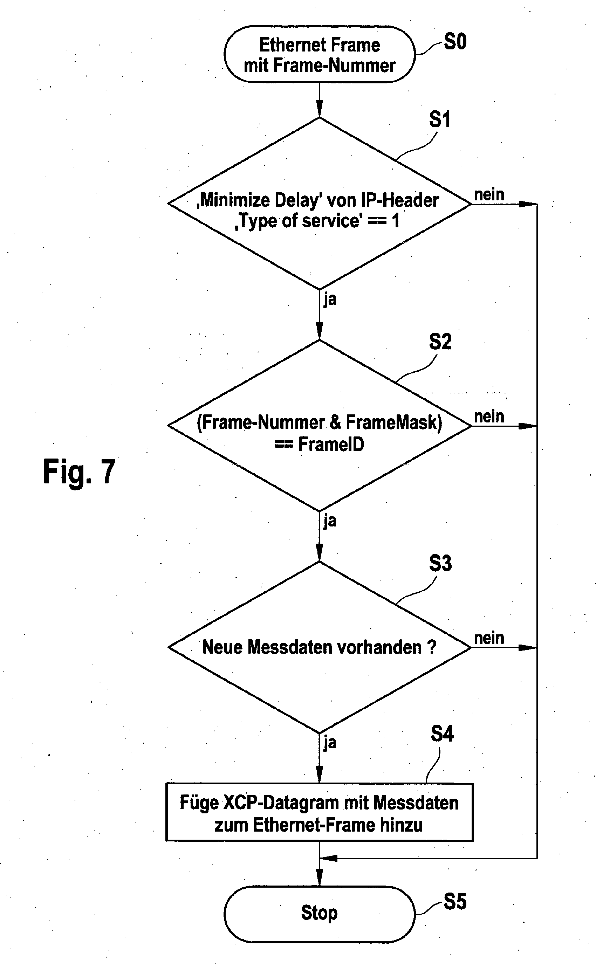

Die Figur 7 zeigt ein einfaches Ablaufdiagramm zur Erläuterung der Funktionsweise des erfindungsgemäßen Verfahrens zur Übertragung von Daten zwischen seriell miteinander verbundenen Modulen 3 Die Figur 7 zeigt das Einbetten bzw Anhängen von Nutzdaten durch ein Modul 3-i der Modulkette 4 Erhält ein Modul 3-i ein Datenpaket in dem Schntt S-0, wird im Schntt S1 durch die Dateneinbettungseinheit 13 zunächst geprüft, ob ein in den Verwaltungsdaten des Datenpakets vorgesehenes Kennzeichnungsflag gesetzt ist, welches anzeigt, dass Daten in das Datenpaket eingebettet werden dürfen. Ist dies der Fall, prüft die Dateneinbettungseinheit 13 anschließend im Schntt S2, ob ein in Abhängigkeit von der Datenpaketnummer gebildeter logischer Vergleichswert mit einer in dem Modul konfigurierten Identifizierungsnummer (frame ID) übereinstimmt Hierzu wird die Datenpaketnummer vorzugsweise logisch UND mit einem konfigurierten Maskierungswert zur Bildung einer als Vergleichswert verknüpft und anschließend mit dei Identifizierungsnummer verglichen. Ist der Vergleichswert mit der Identifizierungsnummer identisch, prüft die Dateneinbettungseinheit 13 anschließend im Schritt S3, ob Messdaten in dem Modul 3 vorhanden bzw. verfügbar sind Ist auch dies der Fall, werden in einem Schntt S4 Mess- bzw. Nutzdaten vorzugsweise als XCP-Datagramm in das empfangene Ethernet-Datenpaket eingebettet bzw hinzugefügt. Der Vorgang endet im Schntt S5.

Wie man aus Figur 7 erkennen kann, werden die Mess- bzw. Nutzdaten nur dann an die empfangenen Datenpakete hinzugefügt, wenn drei Bedingungen erfüllt sind, die in den Schritten S1, S2, S3 geprüft werden. Die Reihenfolge der Prüfungen der verschiedenen Bedingungen ist beliebig, so kann beispielsweise zunächst geprüft werden, ob Messdaten vorhanden sind, und erst anschließend die beiden anderen Bedingungen geprüft werden.

Die Dateneinbettungseinheit 13 bettet Nutzdaten in Datenpakete ein, welche ausgehend von dem letzten Modul 3-N der Modulkette 4 hin zur Datenverarbeitungseinheit 2 übertragen werden. In umgekehrter Richtung koppelt die Datenauskopplungseinheit 12 Daten aus, die von der Datenverarbeitungseinheit 2 in Richtung hin zu dem letzten Modul 3-N der Modulkette 4 übertragen weiden Anhand der Verwaltungsdaten bzw Header Daten der von der Datenverarbeitungseinheit 2 hin zu dem Modul 3 ubertiagene Datenpakete werden die für das jeweilige Modul 3 bestimmten Datenpakete erkannt und die dann enthaltenen Nutzdaten durch die Datenauskopplungseinheit 12 ausgekoppelt.

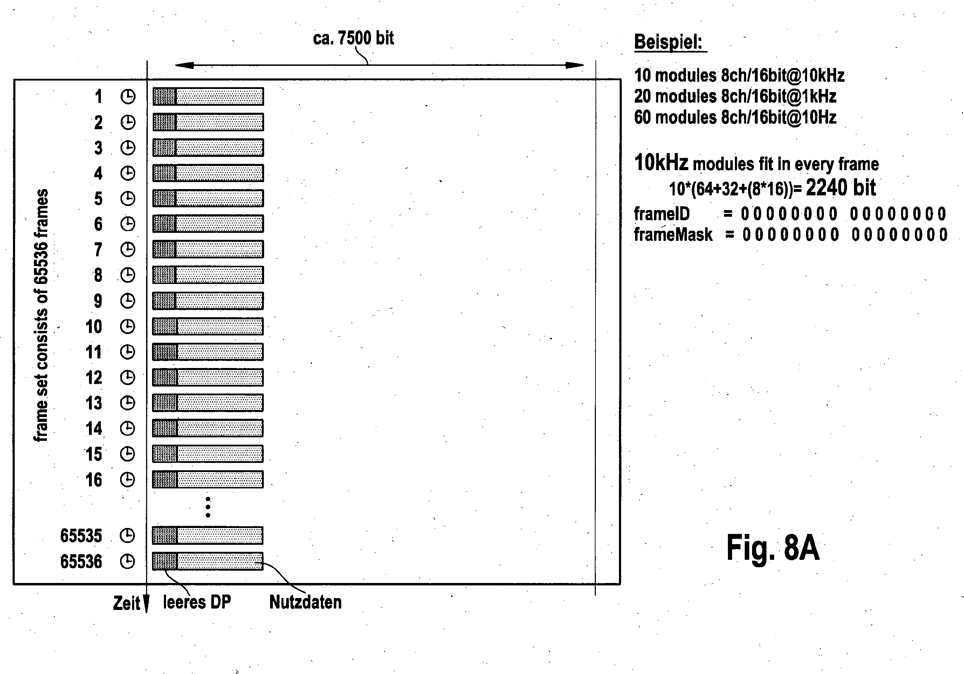

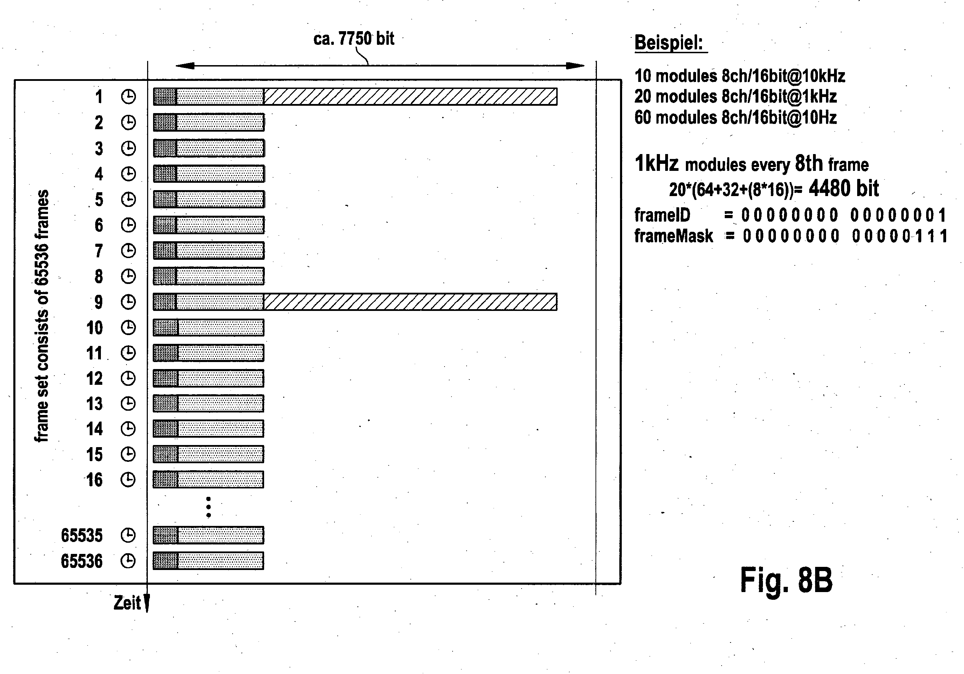

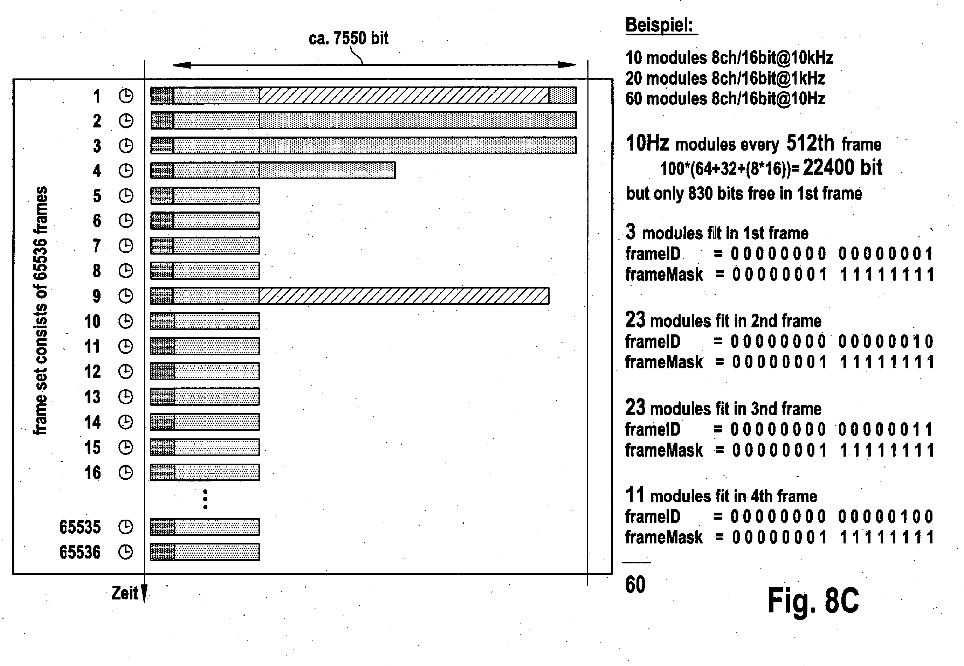

Die Figuren 8a, 8b, 8c zeigen verschiedene Beispiele zur Erläuterung der Funktionsweise des erfindungsgemäßen Verfahrens zur Echtzeitdatenübertragung. In den Figuren 8a, 8b, 8c ist die Zeitachse von oben nach unten aufgetragen. Die links neben der Achse stehende Nummenerierung gibt die Datenpaketnummer der Datenpakete an, welche der Datenpaketgenerator 18-N des letzten Moduls 3-N genenert Die Frame Frequenz bzw Datenpaketfrequenz beträgt bei dem angegebenen Beispiel 10 Kilohertz. Das bedeutet bei einer Datenübertragung über 100 Megabit Ethernet, dass jedes aufeinanderfolgende Ethernet-Datenpaket 10000 Bit einschließlich dem Mindestabstand (inter frame gap) beinhalten kann In den Diagrammen der Figuren 8a, 8b, 8c ist von links nach rechts die Zeitdauer bzw die Lange eines Ethernet-Datenpakets in Bit aufgetragen. Jedes Ethernet-Datenpaket beinhaltet ein leeres Datenpaket ohne Nutzdaten, die durch den Datenpaketgenerator erzeugt werden. Dieses leere Datenpaket umfasst etwa 500 Bit. Dieser Anteil ist in jedem Ethernet-Datenpaket vorhanden. Zusätzlich werden etwa 2000 Bit als Mindestabstand bzw Lucke zwischen zwei aufeinanderfolgenden Messdatenframes vorgesehen. Diese zeitlichen Lücken von etwa 2000 Bit sind vorgesehen, um sonstige Ethernet-Datenpakete in den Datenstrom einzufügen, die von dem Mikroprozessor des Moduls 3 an die Datenverarbei-tungseinheit 2 gesendet werden. Das Multiplexen der Messdaten-Datenpakete und der sonstigen Ethernet-Datenpakete, die von dem Mikroprozessor generiert werden, erfolgt automatisch in den Media Access Controllern der Module 3 Jedes Ethernet-Datenpaket kann somit in den gegebenen Beispielen noch mit etwa 7500 Bit Nutzdaten aufgefüllt werden.

Bei den in Figuren 8a bis 8c dargelegten Beispiel sind 90 Module 3-i vorgesehen, die jeweils über acht Messkanale verfügen.

Zehn erste Module 3 weisen eine Datenerfassungsrate von 10 Kilohertz auf Die Länge eines angehängten XCP-Datagramms berechnet sich zu

64bit [XCP overhead] + 32 bit [Zeitstempel] + (8 * 16bit) [Messdaten]= 224 bit

Zwanzig weitere Module 3 haben bei dem gegebenen Beispiel eine Erfassungsrate von 1 Kilo-hertz. Die XCP-Datagrammlänge beträgt ebenfalls 224 Bit pro Modul. Die 60 übrigen Module 3 weisen eine Erfassungsrate von 10 Hertz auf. Die XCP-Datagrammlänge beträgt agt ebenfalls 224 Bit pro Modul

Zunächst wird bei dem angegebenen Beispiel die Bandbreite für die ersten zehn Module 3 reserviert, die jeweils eine Datenerfassungsrate ate von 10 Kilohertz aufweisen. Die Messdatenfrequenz dieser Module 3 entspricht der Frequenz, mit welcher der Datenpaketgenerator 18-N die leeren Datenpakete generiert. Daher muss in jedem Ethernet-Datenpaket das von dem Datenpaketgenerator 18-N generiert wird, Platz für Nutzdaten dieser Module reserviert werden Die Dateneinbettungseinheiten 13 aller dieser ersten zehn Module 3 werden daher mit folgenden Werten konfiguriert:

Maskierungswert (frame mask) = Identifizierungsnummer (frame ID) = 00000000 00000000 (binär)

Die logische Verknüpfung:

(frame mask) AND (frame number) = frame ID

ist daher bei diesen Modulen für jede Datenpaketnummer erfüllt. Die in Figur 8a dargestellten Datenpakete setzen sich aus den 500 Bit eines leeren Datenpakets und aus Nutzdaten zusammen, die gleichmäßig über alle Datenpakete verteilt werden.

Figur 8b zeigt die Situation, wenn für die weiteren 20 Module 3, die jeweils eine 1 Kilohertz Datenerfassungsrate aufweisen, Platz für Nutzdaten reserviert wird. Hierzu wird in dem angegebenen Beispiel Platz in jedem achten Datenpaket zur Aufnahme von Nutzdaten reservirert. Die logische Gleichung:

(00000000 00000111) AND (Frame-Number) = (00000000 00000001) ist für jedes Datenpaket mit der Datenpaketnummer 1, 9, 17 usw erfüllt.

Die in Figur 8b gestrichelten Balken reflektieren die für die 20 weiteren Module 3 reservierte Bandbreite

Figur 8c zeigt die Situation nachdem anschließend Platz für die weiteren 60 Module 3 reserviert wird, die mit 10 Hz Datenerfassungsfi equenz arbeiten.

In dem Datenrahmen mit der Nummer 1 besteht nur noch Platz für drei weitere Module Diese drei weiteren Module 3 erhalten die folgenden Konfigurationswerte:

FrameID = 00000000 00000001

FrameMask = 00000001 11111111

FrameMask AND frame Number = frameID

ist dann für die Datenpakete mit den Datenpaketnummern 1, 513, 1025 usw. erfüllt.

Von den übrigen 57 Modulen 3, welche mit 10 Hz Datenerfassungsfrequenz arbeiten, wird Platz bzw Bandbreite in den Datenpaketen mit der Datenpaketnummer 2, 514, 1026 usw reserviert.

Hierzu werden diese Module 3 mit den folgenden Konfigurationswerten versehen

FrameID = 00000000 00000010, frameMask = 00000001 11111111

Die Nutzdaten von 23 der 57 Module passen in das zweite Datenpaket d.h mit den Datenpaketnummern 2, 514, 1026. Die nächsten 23 der 57 Module 3 passen in das dritte Datenpaket und werden in die Datenpakete mit den Datenpaketnummern 3, 515, 1027 eingefügt. Diese Module 3 erhalten die folgenden Konfigurationswerte:

FrameID = 00000000 00000011,
FrameMask = 00000001 11111111

Schließlich bleiben von den 60 Modulen noch 11 Module übrig (57 - 23 - 23 = 11). Fur diese Module 3 wird Platz in den Datenpaketen mit der Datenpaketnummer 4, 516, 1028 usw. reserviert.

Die Diagramme in den Figuren 8a, 8b, 8c zeigen Balken an, welche lediglich die Reservierung der entsprechenden Bandbreite angeben Die Position einzelner XCP-Datagramme der Module 3 innerhalb der Datenpakete kann beliebig sein, und hangt von der Position des entsprechenden Moduls 3 innerhalb der Modulkette 4 ab.

Die Zuweisung der Bandbreite für die verschiedenen Module 3 erfolgt mittels eines jeweils konfigurierten Maskierungswertes (frameMask) und mittels einer Identifizierungsnummer (frameID).

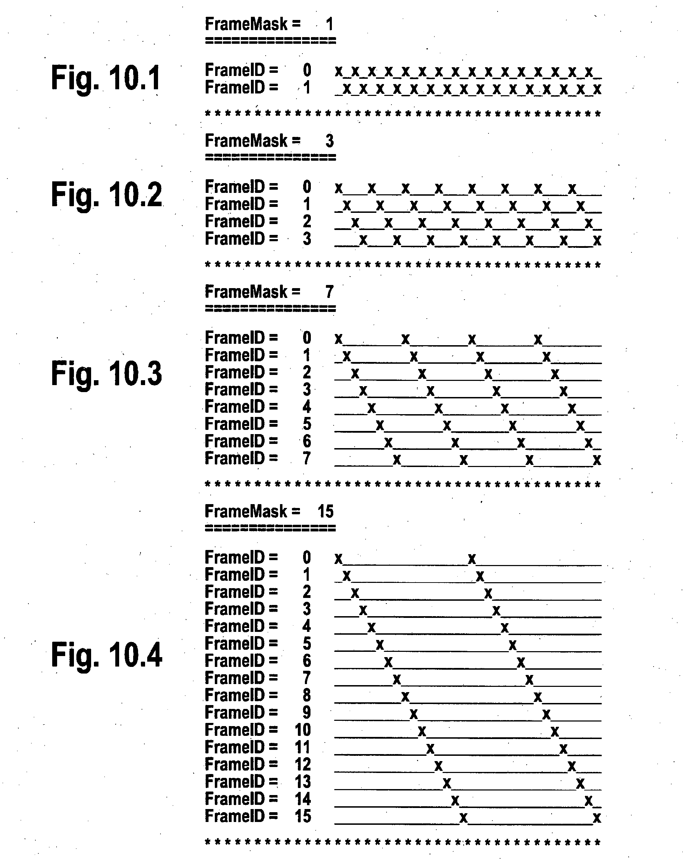

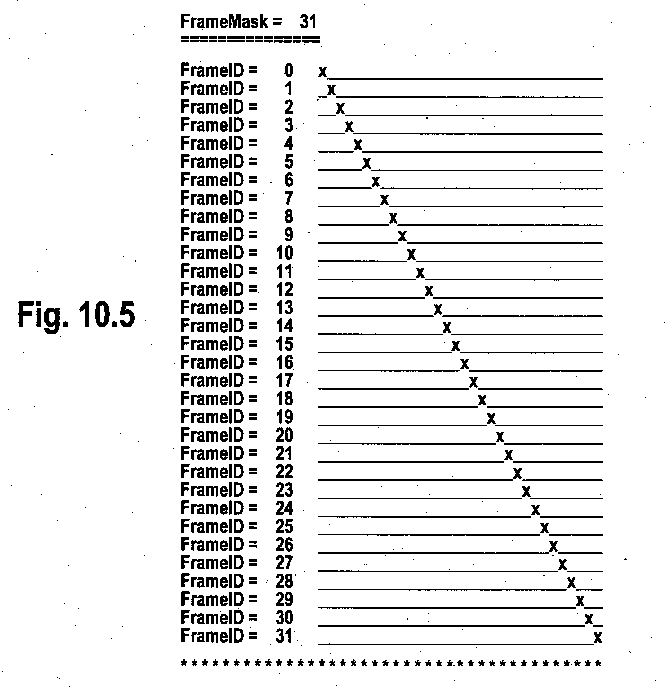

Durch geeignete Wahl dieser beiden Werte wird die Perriodizität bezogen auf die Datenpaketnummer für die Platz- bzw. Bandbreitenreservierung eingestellt. Bei einer bevorzugten Ausführungsform des erfindungsgemäßen Verfahrens ist der Wertebereich für den konfigurierbaren Maskierungswert (frameMask) derart eingeschränkt, dass der Wert eine rechtsbündige Gruppe von Einsen innerhalb eines 16 Bit umfassenden Binärwertes aufweist (0000000000000001, 0000000000000011, 000000000000111, usw.). Dies entspricht den Maskierungs-Werten 1, 3, 7, 15, 31 wie sie in Figur 10 dargestellt sind Zur Vereinfachung ist dort ein Schema mit 5Bit breiten Werten angegeben Wie man aus Figur 10 erkennen kann, kann durch die Wahl des Maskierungswertes (frameMask) die Periodizität festgelegt wei den. Beispielsweise ist für frameMask=1 Platz für Nutzdaten in jedem zweiten Datenpaket reserviert Für frameMask = 2 ist Platz für Nutzdaten in jedem viertem Datenpaket reserviert Für frameMask = 7 ist Platz für Nutzdaten in jedem achten Datenpaket reserviert usw Durch die Zeitschlitze sind also Datenpaketabstande von 2" realisierbar, wobei n die Bitbreite der rechtsbündigen Einsergruppe eines Maskierungswertes (frameMask) in Binärdarstellung ist. Der Wert der Identifizierungsnummer (frameID) verschiebt, wie in Figur 10 erkennbar, das Zeitschema um eine Anzahl von Frames bzw Datenpaketen, die dem Wert der Identifizierungsnummer entspncht

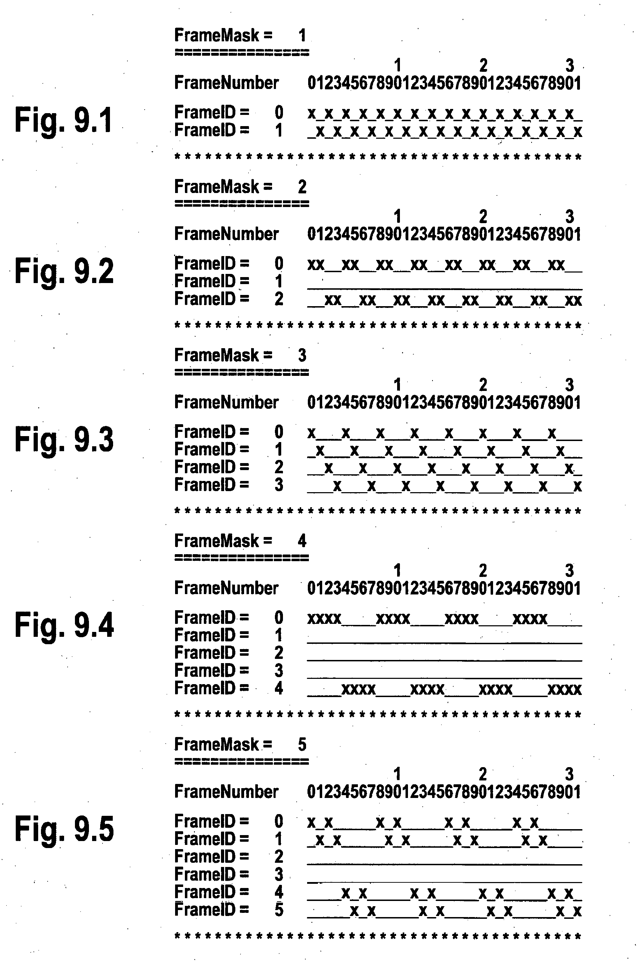

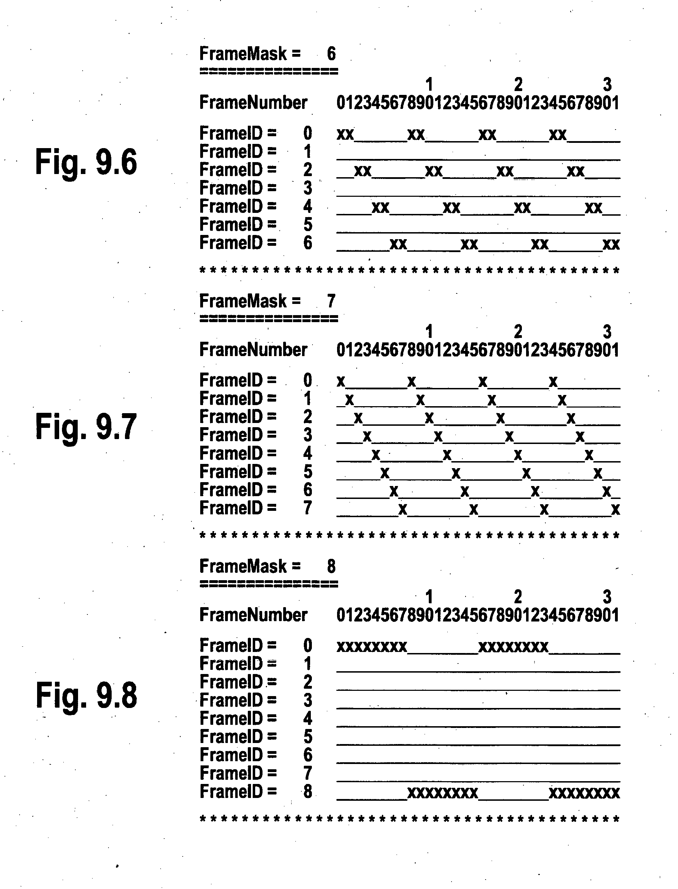

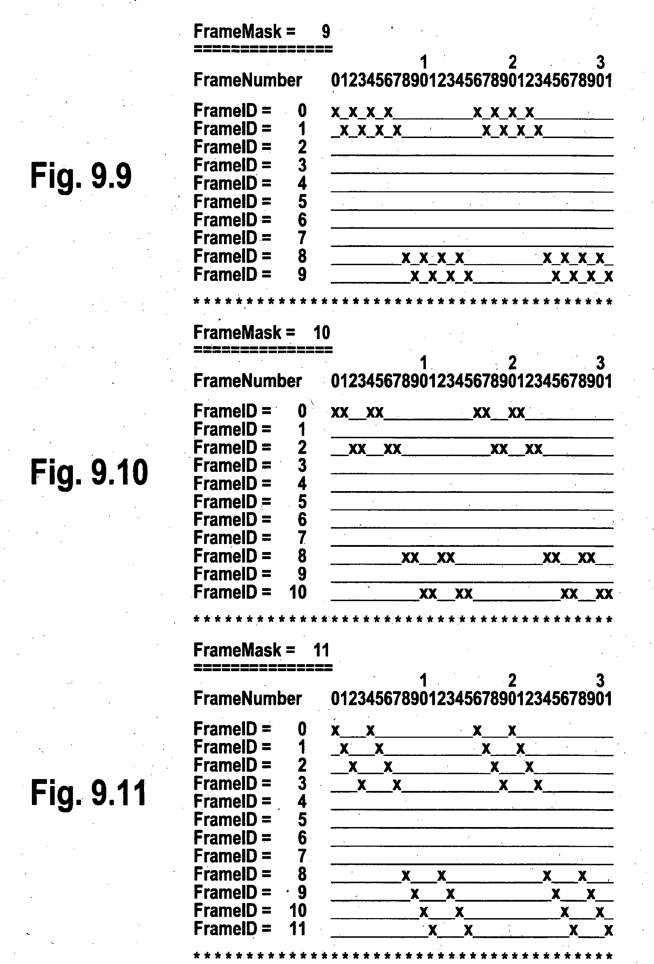

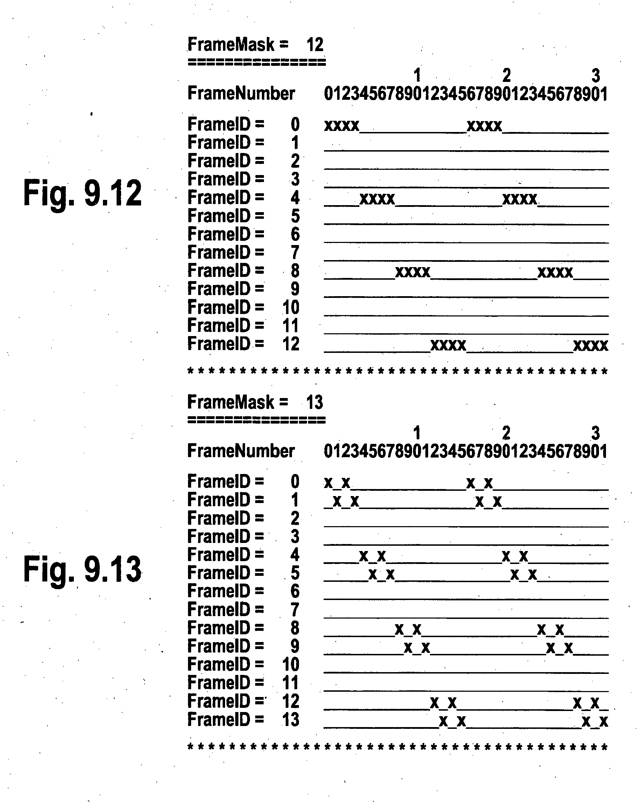

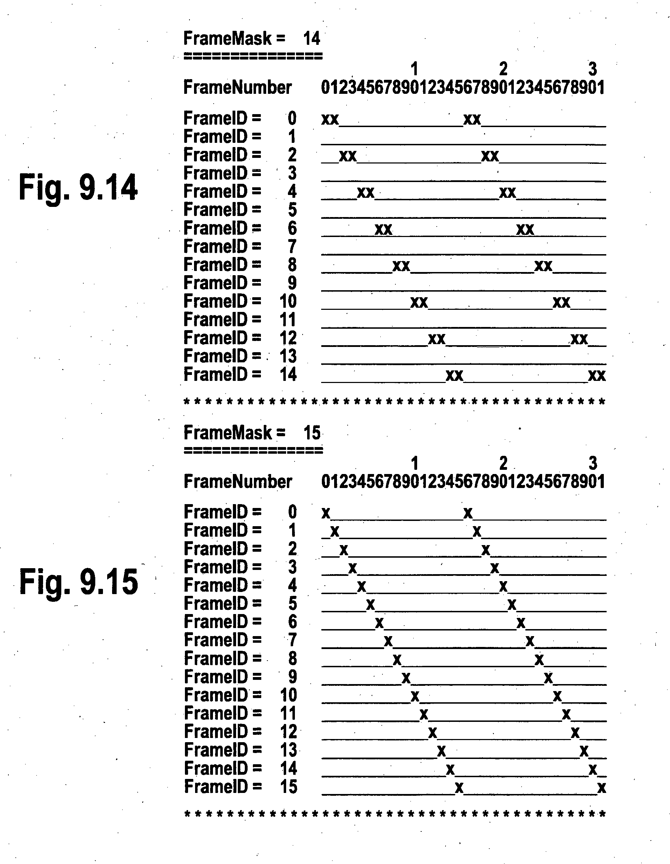

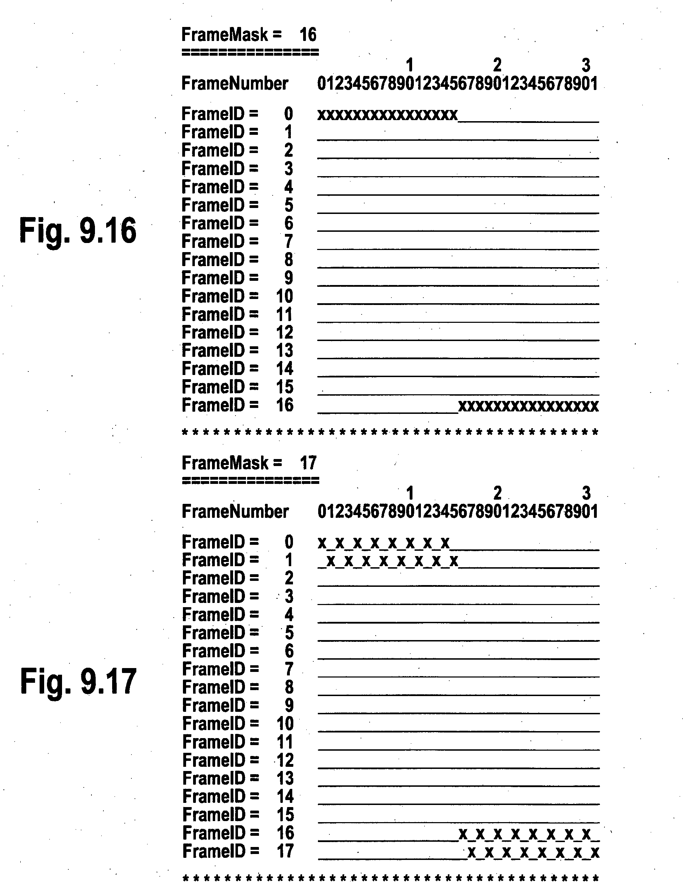

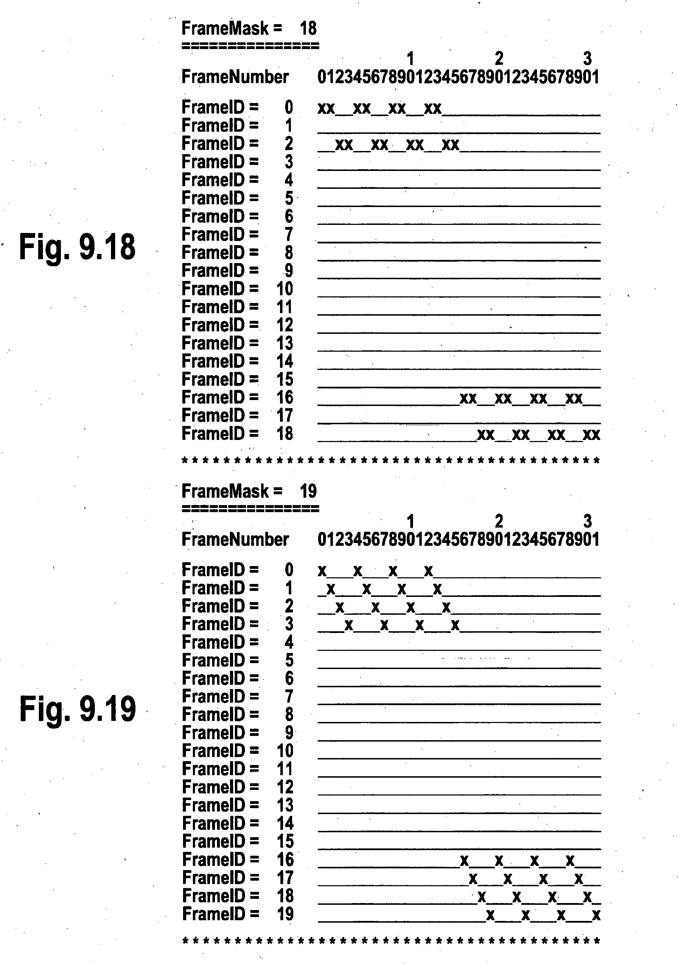

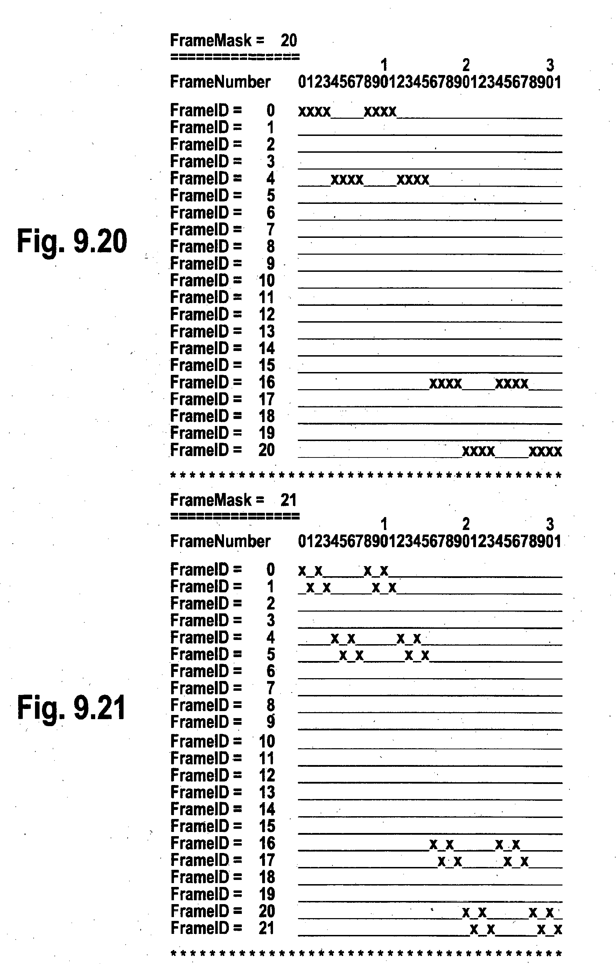

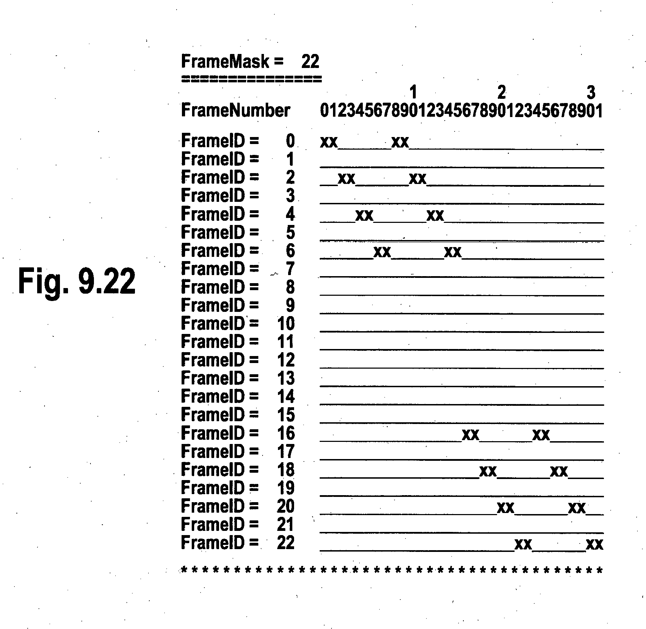

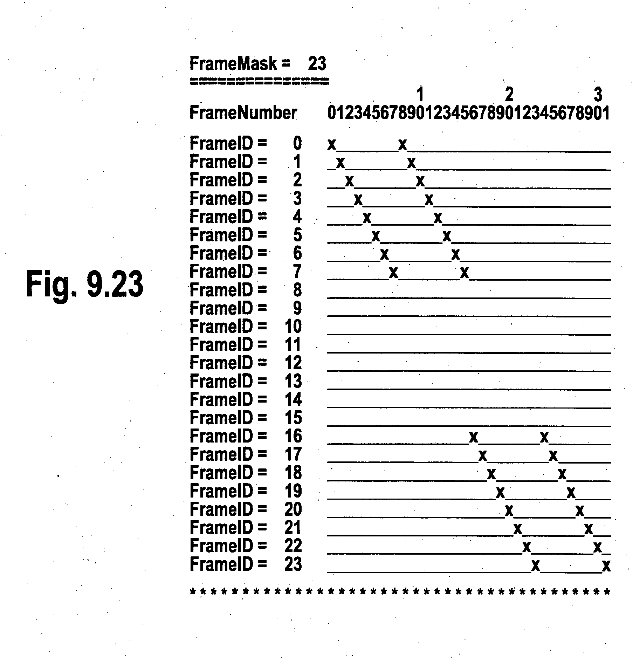

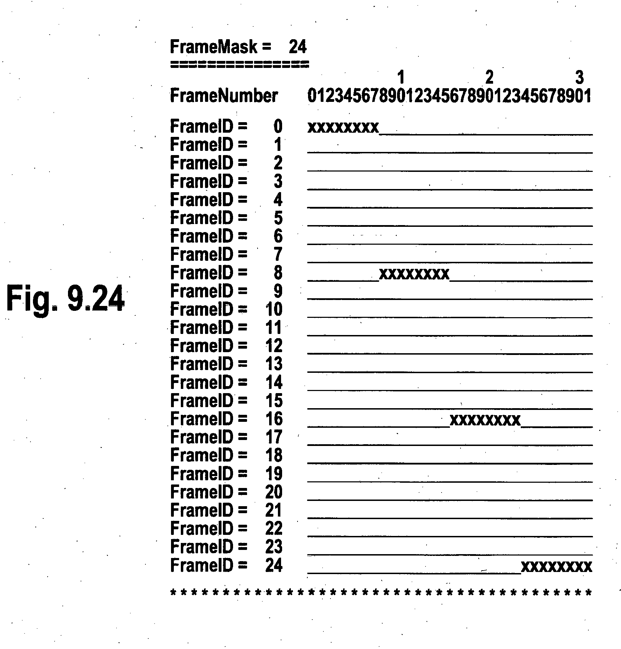

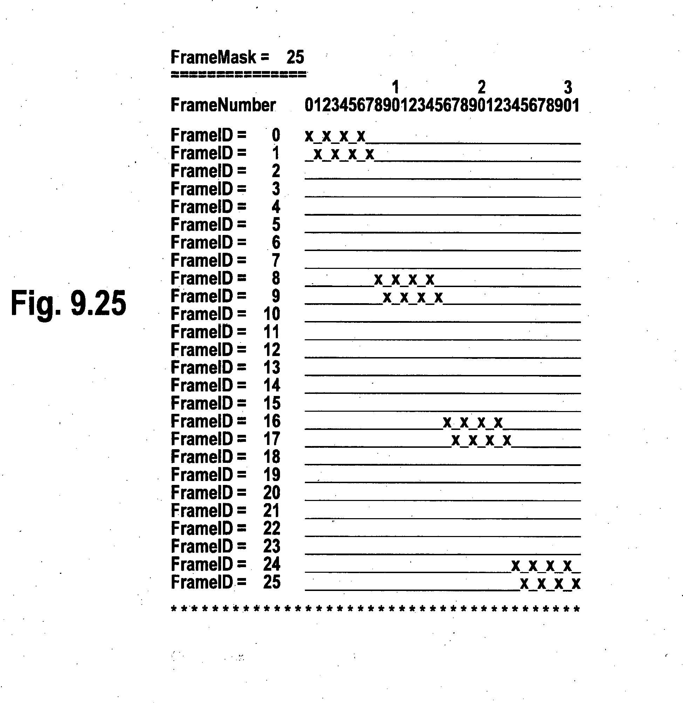

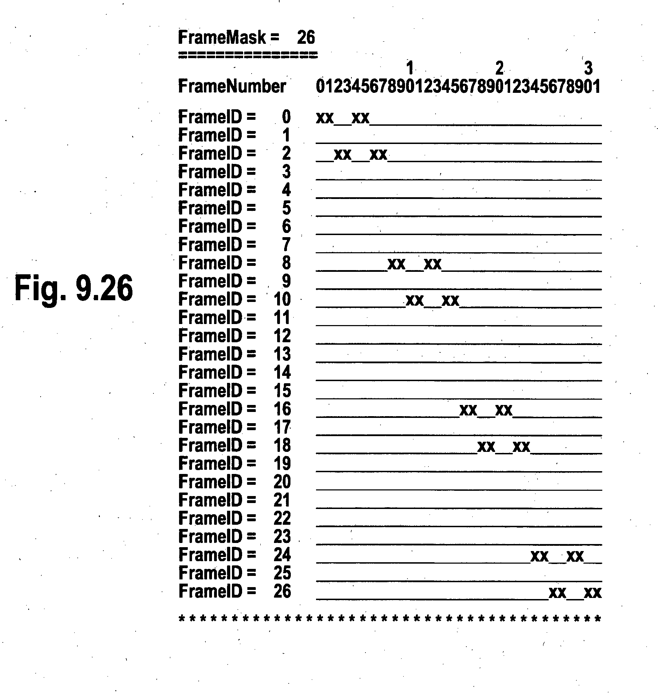

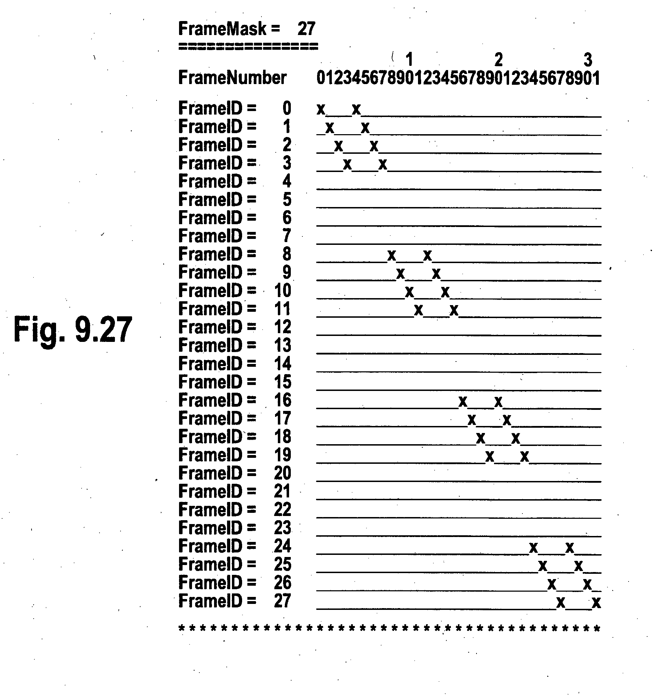

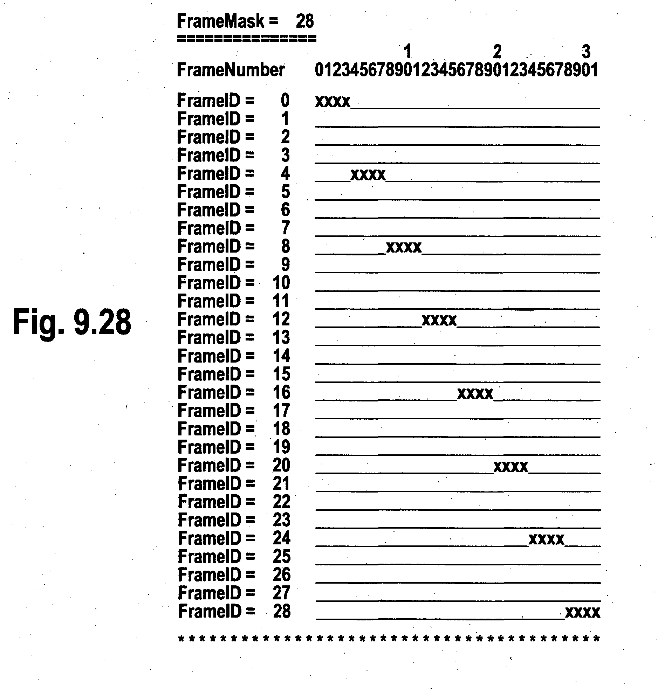

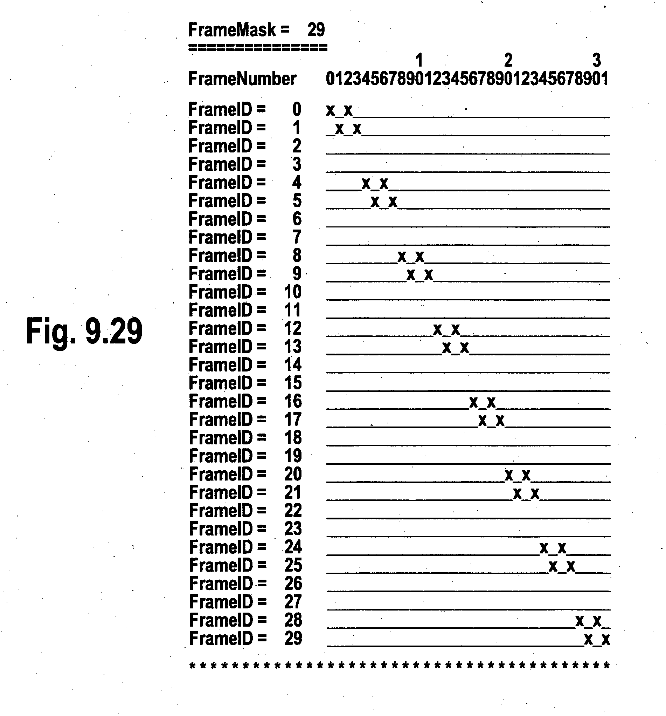

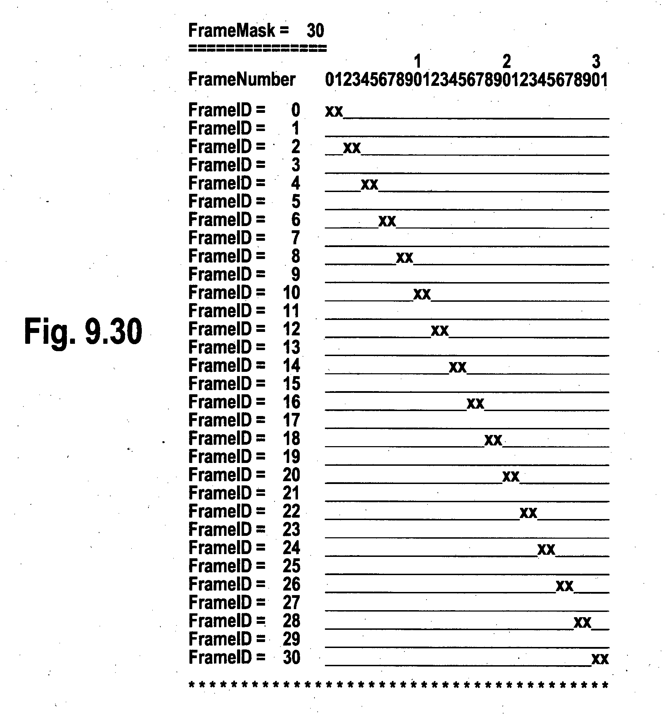

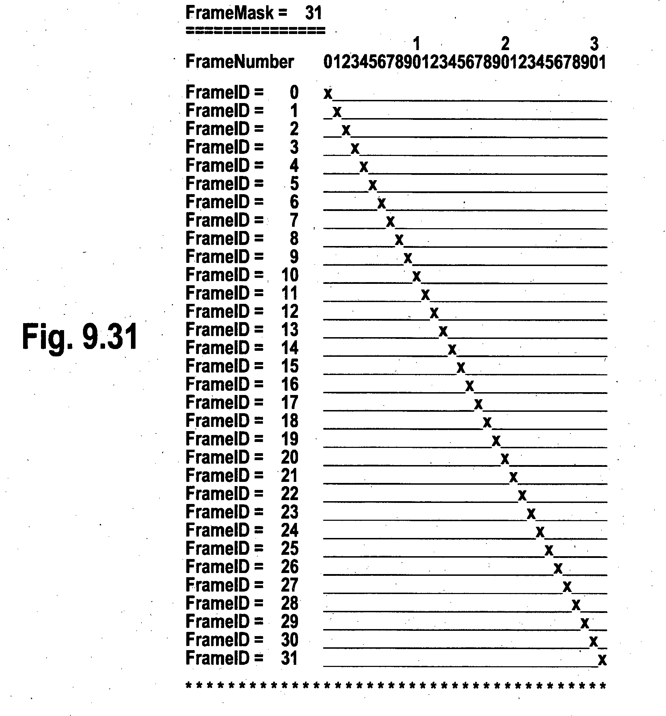

Figur 9 zeigt beispielhaft die Situation für alle Maskierungsweite (frameMask) mit einer Bitbreite von 5 Bit Lässt man alle Werte für die Maskierungswerte und die Identifizierungsnummer (frameID) zu, ergeben sich unterschiedliche Möglichkeiten zur Verteilung von Zeitschhtzen an die unterschiedlichen Module 3

Das erfindungsgemäße Verfahren zum Übertragen von Daten setzt nicht voraus, dass als physikalisches Übertragungsmedium Ethernet verwendet wird. Ferner ist das erfindungsgemäße Verfahren auch nicht auf XCP als Nutzdatenprotokoll eingeschränkt. Prinzipiell kann das erfindungsgemaße Datenübertragungsverfahren auf jedem physikalischen Übertragungsmedium angewendet werden, bei dem Vollduplex-Betrieb möglich ist.

Bei einer bevorzugten Ausführungsform wird der Vergleichswert durch eine logische Verknüpfung der in dem empfangenen Datenpaket enthaltenen Datenpaketnummer (frame number) mit einem in dem Modul 3 konfigurierten Maskierungswert (fiameMask) gebildet.

Bei einer alternativen Ausführungsform wird der Vergleichswert durch die Datenpaketnummer selbst gebildet Bei dieser Ausführungsform ist in dem Modul 3 eine Liste mit Nummern gespeichert Die Datenpaketnummer des ankommenden Datenpaketes wird durch das Modul 3 mit allen Einträgen dieser Liste verglichen. Bei Übereinstimmung der Datenpaketnummer mit einer der abgespeicherten Nummern werden Nutzdaten durch das Modul3 -an das empfangene Datenpaket zur Erzeugung eines erweiterten Datenpakets angehängt bzw darin eingebettet.

**Patentansprüche**

1. Verfahren zum Übertragen von Daten zwischen seriell miteinander verbundenen Modulen (3), bei dem Nutzdaten eines Moduls (3i) jeweils in ein von einem vorgeschalteten Modul (3i+1) empfangenes Datenpaket (Frame), welches eine eindeutige Datenpaketnummer (Frame Number) aufweist, eingebettet werden, wenn ein in Abhängigkeit von der Datenpaketnummer gebildeter Vergleichswert mit einer in dem Modul (3i) vorgesehenen Identifizierungsnummer (Frame-ID) übereinstimmt,
wobei die seriell miteinander verbundenen Module (3) eine Modulkette (4) bilden, die an eine Datenverarbeitungseinheit (2) angeschlossen ist, welche die in den Datenpaketen übertragenen Daten verarbeitet;
**dadurch gekennzeichnet**:

    wobei das von der Datenverarbeitungseinheit (2) am weitesten entfernte Modul (3-N) der Modulkette (4) einen Datenpaketgenerator (18-N) aufweist, der periodisch leere Datenpakete, die keine Nutzdaten enthalten, generiert, und das generierte Datenpaket von dem am weitesten entfernten Modul (3-N) der Modulkette (4) In Richtung zu der Datenverarbeitungseinheit (2) an das nächste Modul (3-N-1) übertragen wird;
    und wobei mindestens einmal der Verfahrensschritt ausgeführt wird, dass das empfangende Modul (3-N-1), wenn der in Abhängigkeit von der Datenpaketnummer (Frame Number) gebildeter Vergleichswert mit einer in dem Modul (3-N-1) vorgesehenen Identifizierungsnummer (Frame-ID) übereinstimmt, die in dem jeweiligen Modul (3-N-1) verfügbaren Nutzdaten in das empfangene Datenpaket (Frame) zur Erzeugung eines erweiterten Datenpakets (Frame) einbettet, während dieses in Richtung zu der Datenverarbeitungseinheit (2) an das nächste Modul (3) übertragen wird.

2. Verfahren nach Anspruch 1, wobei der Vergleichswert durch logische Verknüpfung der Datenpaketnummer (Frame Number) mit einem konfigurierbaren Maskierungswert (Frame Mask) gebildet wird.

3. Verfahren nach Anspruch 2, wobei die Datenpaketnummer (Frame Number) mit dem Maskierungswert (Frame Mask) logisch UND-verknüpft wird.

4. Verfahren nach Anspruch 1, wobei der Vergleichswert durch die Datenpaketnummer (Frame Number) gebildet wird.

5. Verfahren nach Anspruch 1, wobei in den Modulen (3) jeweils mindestens eine Identifizierungsnummer (Frame-ID) gespeichert wird.

6. Verfahren nach Anspruch 1, wobei in den Modulen (3) jeweils mindestens ein Maskierungswert (Frame Mask) gespeichert wird.

7. Verfahren nach Anspruch 1, wobei die Nutzdaten des Moduls (3) als Nutzdaten eines Datagramms in das empfangene Datenpaket eingebettet werden.

8. Verfahren nach Anspruch 7, wobei das Datagramm durch ein XCP-Datagramm gebildet wird.

9. Verfahren nach Anspruch 1, wobei die Nutzdaten durch das Modul (3) jeweils in das empfangene Datenpaket zur Erzeugung eines erweiterten Datenpaketes eingebettet werden, wenn Nutzdaten in dem Modul (3) verfügbar sind.

**10.** Verfahren nach Anspruch 9, wobei die Nutzdaten durch das Modul (3) jeweils in das empfangene Datenpaket zur Erzeugung des erweiterten Datenpaketes eingebettet werden, wenn ein in dem empfangenen Datenpaket enthaltenes Kennzeichnungsflag gesetzt ist.

**11.** Verfahren nach Anspruch 1, wobei die Nutzdaten durch Messdaten gebildet werden.

**12.** Verfahren nach Anspruch 1, wobei die Frequenz $f_{fg}$, mit welcher der Datenpaketgenerator (18-N) des letzten Moduls (3-N) die leeren Datenpakete generiert, derart eingestellt wird, dass sie gleich oder höher ist als die höchste vorkommende Messdatenrate in den Modulen (3) der Modulkette (4).

**13.** Verfahren nach Anspruch 1, wobei die durch den Datenpaketgenerator (18-N) generierten Datenpakete jeweils Verwaltungsdaten (Header Daten) mit der jeweiligen eindeutigen Datenpaketnummer des Datenpaketes aufweisen.

**14.** Verfahren nach Anspruch 1, wobei der Datenpaketgenerator (18-N) die generierten leeren Datenpakete fortlaufend durchnummeriert.

**15.** Verfahren nach Anspruch 1, wobei die Modulen (3) der Modulkette (4) miteinander synchronisiert werden.

**16.** Verfahren nach Anspruch 1, wobei die Datenpakete vollduplex über ein Übertragungsmedium (5) übertragen werden.

**17.** Verfahren nach Anspruch 1, wobei die Datenverarbeitungseinheit (2) Datenpakete, welche Ausgabedaten und Stelldaten als Nutzdaten enthalten, an die Module (3) der Modulkette (4) überträgt.

**18.** Verfahren nach Anspruch 17, wobei jedes Modul (3) der Modulkette (4) anhand der Verwaltungsdaten der von der Datenverarbeitungseinheit (2) an das Modul (3) übertragenen Datenpakete die für das Modul (3) jeweils bestimmten Datenpakete erkennt und die darin enthaltenen Nutzdaten auskoppelt.

**19.** Verfahren nach einem der vorangehenden Ansprüche 1 bis 18, wobei die übertragenen Datenpakete durch Ethemet-Datenpakete gebildet werden.

**20.** Verfahren nach Anspruch 16, wobei das Übertragungsmedium (5) durch ein 100 MB-Ethemet-Kabel gebildet wird.

**21.** Echtzeit-Datenübertragungssystem zur Übertragung von Daten zwischen seriell miteinander verbundenen Modulen, wobei jedes Modul (3i) seine Nutzdaten in ein von einem vorgeschalteten Modul (3i+1) empfangenes Datenpaket (Frame), das eine Datenpaketnummer (Frame Number) aufweist, einbettet, wenn ein in Abhängigkeit von der Datenpaketnummer gebildeter Vergleichswert mit einer in dem Modul vorgesehenen Identifizierungsnummer (Frame-ID) übereinstimmt,
wobei die seriell miteinander verbundenen Module (3) eine Modulkette (4) bilden, die an eine Datenverarbeitungseinheit (2) angeschlossen ist, welche die in den Datenpaketen übertragenen Daten verarbeitet;
wobei das von der Datenverarbeitungseinheit (2) am weitesten entfernte Modul (3-N) der Modulkette (4) einen Datenpaketgenerator (18-N) aufweist, der periodisch leere Datenpakete, die keine Nutzdaten enthalten, generiert, und das generierte Datenpaket von dem am weitesten entfernten Modul (3-N) der Modulkette (4) in Richtung zu der Datenverarbeitungseinheit (2) an das nächste Modul (3-N-1) übertragen wird;
und wobei jeweils das empfangende Modul (3-N-1) seine Nutzdaten in das empfangene Datenpaket (Frame), welches eine Datenpaketnummer (Frame Number) aufweist, einbettet, wenn ein in Abhängigkeit von der Datenpaketnummer(Frame Number) gebildeter Vergleichswert mit einer in dem Modul (3i) vorgesehenen Identifizierungsnummer (Frame-ID) übereinstimmt, während dieses in Richtung zu der Datenverarbeitungseinheit (2) an das nächste Modul (3-N-1) übertragen wird.

**22.** Echtzeit-Datenübertragungssystem nach Anspruch 21, wobei das Echtzeit-Datenübertragungssystem mindestens ein Modul (3i) zur Echtzeit-Datenübertragung umfasst, wobei das Modul (3i) einen ersten Transceiver (3B) zum Anschluss an ein vorgeschaltetes Modul (3i+1), einen zweiten Transceiver (3A) zum Anschluss an ein nachgeschaltetes Modul (3i-1) und eine FPGA-Einheit (3C) aufweist.

**23.** Echtzeit-Datenübertragungssystem nach Anspruch 22, wobei die FPGA-Einheit (3C) des Moduls (3) eine Logikeinheit aufweist, welche die Datenpaketnummer (Frame Number) eines empfangenen Datenpaketes mit einem konfigurierten Maskierungswert (Frame Mask) zur Erzeugung eines Vergleichswertes logisch verknüpft.

**24.** Echtzeit-Datenübertragungssystem nach Anspruch 23, wobei die FPGA-Einheit (3C) des Moduls ein erstes Register zum Speichern eines zugehörigen konfigurierbaren Maskierungswertes (Frame Mask) und ein zweites Register zum Speichern einer zugehörigen konfigurierbaren Identifizierungsnummer (Frame-ID) aufweist.

**25.** Echtzeit-Datenübertragungssystem nach Anspruch 24, wobei die in der FPGA-Einheit (3C) vorgesehene Logikeinheit den gespeicherten Maskierungswert (Frame Mask) mit der Datenpaketnummer (Frame Number) des empfangenen Datenpaketes bitweise zur Erzeugung des Vergleichswertes logisch UNDverknüpft.

**26.** Echtzeit-Datenübertragungssystem nach Anspruch 25, wobei die FPGA-Einheit (3C) eine Vergleichseinheit aufweist, die den von der Logikeinheit erzeugten Vergleichswert mit der gespeicherten Identifizierungsnummer (Frame-ID) vergleicht.

**27.** Echtzeit-Datenübertragungssystem nach Anspruch 22, wobei die FPGA-Einheit (3C) eine Datenauskopplungseinheit (12) und eine Dateneinbettungseinheit (13) aufweist, die über einen ersten MediaAccess-Controller (11) an den ersten Transceiver (3B) und über einen zweiten MediaAccess-Controller (10) an den zweiten Transceiver (3A) angeschlossen sind.

**Claims**

**1.** Method for transmitting data between modules (3) that are connected to one another in series, in which useful data from one module (3i) are respectively embedded into a data packet (frame), which is received from an upstream module (3i+1) and which has a unique data packet number (frame number), when a comparison value formed on the basis of the data packet number matches an identification number (frame ID) provided in the module (3i), wherein the modules (3) connected to one another in series form a module chain (4) that is connected to a data processing unit (2) that processes the data transmitted in the data packets;
**characterized in that**:

the module (3-N) in the module chain (4) that is furthest away from the data processing unit (2) has a data packet generator (18-N) that periodically generates empty data packets that do not contain useful data, and the generated data packet is transmitted from the module (3-N) in the module chain (4) that is furthest away to the next module (3-N-1) in the direction of the data processing unit (2);
and wherein the method step that the receiving module (3-N-1) embeds the useful data available in the respective module (3-N-1) into the received data packet (frame) in order to produce an extended data packet (frame) when the comparison value formed on the basis of the data packet number (frame number) matches an identification number (frame ID) provided in the module (3-N-1), while said data packet is transmitted to the next module (3) in the direction of the data processing unit (2), is executed at least once.

**2.** Method according to Claim 1, wherein the comparison value is formed by logically combining the data packet number (frame number) with a configurable masking value (frame mask).

**3.** Method according to Claim 2, wherein the data packet number (frame number) is logically ANDed with the masking value (frame mask).

**4.** Method according to Claim 1, wherein the comparison value is formed by the data packet number (frame number).

**5.** Method according to Claim 1, wherein the modules (3) are each used to store at least one identification number (frame ID).

**6.** Method according to Claim 1, wherein the modules (3) are each used to store at least one masking value (frame mask).

**7.** Method according to Claim 1, wherein the useful data from the module (3) are embedded into the received data packet as useful data of a datagram.

**8.** Method according to Claim 7, wherein the datagram is formed by an XCP datagram.

**9.** Method according to Claim 1, wherein the useful data are each embedded by the module (3) into the received data packet in order to produce an extended data packet when useful data are available in the module (3).

**10.** Method according to Claim 9, wherein the useful data are each embedded by the module (3) into the received data packet in order to produce the extended data packet when a characterization flag that the received data packet contains is set.

**11.** Method according to Claim 1, wherein the useful data are formed by measurement data.

**12.** Method according to Claim 1, wherein the frequency $f_{fg}$ at which the data packet generator (18-N) in the last module (3-N) generates the empty data packets is adjusted such that it is the same as or higher than the highest occurring measurement data rate in the modules (3) of the module chain (4).

**13.** Method according to Claim 1, wherein the data packets generated by the data packet generator (18-N) each have management data (header data) with the respective unique data packet number of the data packet.

**14.** Method according to Claim 1, wherein the data packet generator (18-N) consecutively numbers the generated empty data packets.

**15.** Method according to Claim 1, wherein the modules (3) of the module chain (4) are synchronized to one another.

**16.** Method according to Claim 1, wherein the data packets are transmitted in full duplex mode by means of a transmission medium (5).

**17.** Method according to Claim 1, wherein the data processing unit (2) transmits data packets that contain output data and control data as useful data to the modules (3) of the module chain (4).

**18.** Method according to Claim 17, wherein each module (3) in the module chain (4) uses the management data in the data packets transmitted from the data processing unit (2) to the module (3) to recognize the data packets respectively determined for the module (3) and decouples the useful data contained therein.

**19.** Method according to one of the preceding Claims 1 to 18, wherein the transmitted data packets are formed by Ethernet data packets.

**20.** Method according to Claim 16, wherein the transmission medium (5) is formed by a 100-MB Ethernet cable.

**21.** Real-time data transmission system for transmitting data between modules that are connected to one another in series,
wherein each module (3i) embeds its useful data into a data packet (frame), which is received from an upstream module (3i+1) and which has a data packet number (frame number), when a comparison value formed on the basis of the data packet number matches an identification number (frame ID) provided in the module,
wherein the modules (3) connected to one another in series form a module chain (4) that is connected to a data processing unit (2) that processes the data transmitted in the data packets;
wherein the module (3-N) in the module chain (4) that is furthest away from the data processing unit (2) has a data packet generator (18-N) that periodically generates empty data packets that do not contain useful data, and the generated data packet is transmitted from the module (3-N) in the module chain (4) that is furthest away to the next module (3-N-1) in the direction of the data processing unit (2);
and wherein the respective receiving module (3-N-1) embeds its useful data into the received data packet (frame), which has a data packet number (frame number), when a comparison value formed on the basis of the data packet number (frame number) matches an identification number (frame ID) provided in the module (3i), while said data packet is transmitted to the next module (3-N-1) in the direction of the data processing unit (2).

**22.** Real-time data transmission system according to Claim 21, wherein the real-time data transmission system comprises at least one module (3i) for real-time data transmission, wherein the module (3i) has a first transceiver (3B) for connection to an upstream module (3i+1), a second transceiver (3A) for connection to a downstream module (3i-1) and an FPGA unit (3C).

**23.** Real-time data transmission system according to Claim 22, wherein the FPGA unit (3C) of the module (3) has a logic unit that logically combines the data packet number (frame number) of a received data packet with a configured masking value (frame mask) in order to produce a comparison value.

**24.** Real-time data transmission system according to Claim 23, wherein the FPGA unit (3C) of the module has a first register for storing an associated configurable masking value (frame mask) and a second register for storing an associated configurable identification number (frame ID).

**25.** Real-time data transmission system according to Claim 24, wherein the logic unit provided in the FPGA unit (3C) logically ANDs the stored masking value (frame mask) with the data packet number (frame number) of the received data packet on a bit-by-bit basis in order to produce the comparison value.

**26.** Real-time data transmission system according to Claim 25, wherein the FPGA unit (3C) has a comparison unit that compares the comparison value produced by the logic unit with the stored identification number (frame ID).

**27.** Real-time data transmission system according to Claim 22, wherein the FPGA unit (3C) has a data decoupling unit (12) and a data embedding unit (13) that are connected to the first transceiver (3B) via a first media access controller (11) and to the second transceiver (3A) via a second media access controller (10).

**Revendications**

**1.** Procédé de transmission de données entre des modules interconnectés en série (3), dans lequel des données utiles d'un module (3i) sont respectivement incorporées à un paquet de données (trame) reçu dans un module amont (3i+1), lequel paquet possède un numéro de paquet de données unique (numéro de trame), lorsqu'une valeur de comparaison formée en fonction du numéro de paquet de données concorde avec un numéro d'identification (ID de trame) prévu dans le module (3i),
dans lequel les modules interconnectés en série (3) forment une chaîne de modules (4) qui est raccordée à une unité de traitement de données (2) qui traite les données transmises dans les paquets de données ; **caractérisé en ce que** :

le module (3-N) de la chaîne de modules (4) le plus éloigné de l'unité de traitement de données (2) comprend un générateur de paquets de données (18-N) qui génère périodiquement des paquets de données vides ne contenant aucune donnée utile et **en ce que** le paquet de données généré est transmis par le module (3-N) de la chaîne de modules (4) le plus éloigné dans la direction de l'unité de traitement de données (2) au module suivant (3-N-1) ;
et **en ce que** l'étape de procédé consistant à faire en sorte que le module récepteur (3-N-1) incorpore les données utiles disponibles dans le module respectif (3-N-1) au paquet de données reçu (trame) lorsque la valeur de comparaison formée à partir du numéro de paquet de données (numéro de trame) concorde avec un numéro d'identification (ID de trame) prévu dans le module (3-N-1) pour générer un paquet de données étendu (trame), pendant que ledit paquet est transmis en direction de l'unité de traitement de données (2) au module suivant (3), est effectuée au moins une fois.

**2.** Procédé selon la revendication 1, dans lequel la valeur de comparaison est formée par combinaison logique du numéro de paquet de données (numéro de trame) avec une valeur de masquage configurable (masque de trame).

**3.** Procédé selon la revendication 2, dans lequel le numéro de paquet de données (numéro de trame) est combiné par un ET logique avec la valeur de masquage (masque de trame).

**4.** Procédé selon la revendication 1, dans lequel la valeur de comparaison est formée par le numéro de paquet de données (numéro de trame).

**5.** Procédé selon la revendication 1, dans lequel au moins un numéro d'identification (ID de trame) respectif est stocké dans les modules (3).

**6.** Procédé selon la revendication 1, dans lequel au moins une valeur de masquage (masque de trame) respective est stockée dans les modules (3).

**7.** Procédé selon la revendication 1, dans lequel les données utiles du module (3) sont incorporées au paquet de données reçu en tant que données utiles d'un datagramme.

**8.** Procédé selon la revendication 7, dans lequel le datagramme est formé par un datagramme XCP.

**9.** Procédé selon la revendication 1, dans lequel les données utiles sont incorporées par le module (3) au paquet de données reçu respectif pour générer un paquet de données étendu lorsque des données utiles sont disponibles dans le module (3).

**10.** Procédé selon la revendication 9, dans lequel les données utiles sont incorporées par le module (3) au paquet de données reçu respectif pour générer le paquet de données étendu lorsqu'un drapeau d'identification contenu dans le paquet de données reçu est positionné.

**11.** Procédé selon la revendication 1, dans lequel les données utiles sont formées par des données de mesure.

**12.** Procédé selon la revendication 1, dans lequel la fréquence $f_{fg}$ à laquelle le générateur de paquets de données (18-N) du dernier module (3-N) génère les paquets de données vides est définie de manière à ce qu'elle soit supérieure ou égale au débit de données de mesure le plus élevé se produisant dans les modules (3) de la chaîne de modules (4).

**13.** Procédé selon la revendication 1, dans lequel les paquets de données générés par le générateur de paquets de données (18-N) comprennent respectivement des données de gestion (données d'entête) comportant le numéro de paquet de données unique respectif du paquet de données.

**14.** Procédé selon la revendication 1, dans lequel le générateur de paquets de données (18-N) numérote consécutivement de manière continue les paquets de données vides générés.

**15.** Procédé selon la revendication 1, dans lequel les modules (3) de la chaîne de modules (4) sont synchronisés les uns avec les autres.

**16.** Procédé selon la revendication 1, dans lequel les paquets de données sont transmis en duplex intégral par l'intermédiaire d'un support de transmission (5).

**17.** Procédé selon la revendication 1, dans lequel l'unité de traitement de données (2) transmet aux modules (3) de la chaîne de modules (4) des paquets de données qui contiennent des données de sortie et des données de réglage en tant que données utiles.

**18.** Procédé selon la revendication 17, dans lequel chaque module (3) de la chaîne de modules (4) détecte les paquets de données respectivement déterminés pour le module (3) sur la base des données de gestion des paquets de données transmis par l'unité de traitement de données (2) au module (3) et fournit en sortie les données utiles qui y sont contenues.

**19.** Procédé selon l'une quelconque des revendications 1 à 18 précédentes, dans lequel les paquets de données transmis sont formés par des paquets de données Ethernet.

**20.** Procédé selon la revendication 16, dans lequel le support de transmission (5) est formé par un câble Ethernet 100 Mo.

**21.** Système de transmission de données en temps réel destiné à transmettre des données entre des modules interconnectés en série,
dans lequel chaque module (3i) incorpore ses données utiles à un paquet de données (trame) reçu par un module amont (3i+1), lequel paquet possède un numéro de paquet de données (numéro de trame), lorsqu'une valeur de comparaison formée en fonction du numéro de paquet de données concorde avec un numéro d'identification (ID de trame) prévu dans le module,
dans lequel les modules interconnectés en série (3) forment une chaîne de modules (4) qui est raccordée à une unité de traitement de données (2) qui traite les données transmises dans les paquets de données ;
dans lequel le module (3-N) de la chaîne de modules (4) le plus éloigné de l'unité de traitement de données (2) comprend un générateur de paquets de données (18-N) qui génère périodiquement des paquets de données vides ne contenant aucune donnée utile, et le paquet de données généré est transmis par le module (3-N) de la chaîne de modules (4) le plus éloigné dans la direction de l'unité de traitement de données (2) au module suivant (3-N-1) ;
et dans lequel le module récepteur respectif (3-N-1) incorpore respectivement ses données utiles au paquet de données reçu (trame) qui possède un numéro de paquet de données (numéro de trame) lorsqu'une valeur de comparaison formée par le numéro de paquet de données (numéro de trame) concorde avec un numéro d'identification (ID de trame) prévu dans le module (3i), pendant que ledit paquet est transmis en direction de l'unité de traitement de données (2) au module suivant (3-N-1).

**22.** Système de transmission de données en temps réel selon la revendication 21, dans lequel le système de transmission de données en temps réel comprend au moins un module (3i) pour la transmission de données en temps réel, le module (3i) comportant un premier émetteur-récepteur (3B) destiné à être raccordé à un module amont (3i+1), un second émetteur-récepteur (3A), destiné à être raccordé à un module aval (3i-1) et une unité FPGA (3C).

**23.** Système de transmission de données en temps réel selon la revendication 22, dans lequel l'unité FPGA (3C) du module (3) comporte une unité logique qui combine logiquement le numéro de paquet de données (numéro de trame) d'un paquet de données reçu à une valeur de masquage configurée (masque de trame) pour générer une valeur de comparaison.

**24.** Système de transmission de données en temps réel selon la revendication 23, dans lequel l'unité FPGA (3C) du module comporte un premier registre destiné à stocker une valeur de masquage (masque de trame) configurable associée et un second registre destiné à stocker un numéro d'identification (ID de trame) configurable associé.

**25.** Système de transmission de données en temps réel selon la revendication 24, dans lequel l'unité logique prévue dans l'unité FPGA (3C) combine bit à bit par un ET logique la valeur de masquage (masque de trame) stockée avec le numéro de paquet de données (numéro de trame) du paquet de données reçu pour générer la valeur de comparaison.

**26.** Système de transmission de données en temps réel selon la revendication 25, dans lequel l'unité FPGA (3C) comporte une unité de comparaison qui compare la valeur de comparaison générée par l'unité logique au numéro d'identification (ID de trame) stocké.

**27.** Système de transmission de données en temps réel selon la revendication 22, dans lequel l'unité FPGA (3C) comporte une unité de sortie de données (12) et une unité d'incorporation de données (13) qui sont raccordées par l'intermédiaire d'un premier contrôleur d'accès au support (11) au premier émetteur-récepteur (3B) et par l'intermédiaire d'un second contrôleur d'accès au support (10) au second émetteur-récepteur (3A).

Ethernet Switch
MG 1
...
MG N

Fig. 1
Stand der Technik

1
Modul N
FPGA
PHY
PHY
3-N
5-N
4
Modul 2
FPGA
PHY
PHY
3-2
5-2
Modulkette
Modul 1
FPGA
3C-1
PHY
PHY
3A-1
3B-1
3-1
5-1
Daten-
verarbeitungs-
einheit
2
PHY

Fig. 2

FPGA
3C
15
Daten-ausgabe
Calibr. Data Ctrl.
14
Watch-dog
Data buffer
Calibration Data Ctrl.
12
10
FMAC Filter
MAC Filter
RX_BUF
DMA-Ctrl
TX_A/D
TX_BUF
TX_BUF
INT
MAC (IN)
MI Management Ctrl
FIFO 512 Byte
Frame parser (XCP)
XCP Datagram Release Ctrl.
INT
Datenauskopplung
TX_A/D
11
INT
TX_BUF
TX_BUF
RX_BUF
MAC Filter
FMAC Filter
MAC (OUT)
MI Manage-ment Ctrl
MUX
TX_BUF
Frame Gener-ator
18
INT
3B
PHY
9
7
6
8
3A
PHY
Time Sync.
22
TimeSync Ctrl
24
Timer Module
25
19
20
Memory
21
XCP Counter
XCP Counter alignment
INT
Frame parser (XCP)
FIFO 512 Byte
XCP Datagram Append Ctrl.
13
Dateneinbettung
Data buffer
Measurement Data Ctrl.
Measurement Data Ctrl.
17
Messdaten
16
Time Sync.
23
MODUL
3

Fig. 3

4
Modulkette
Daten-
verarbeitungs-
einheit
2
Daten-
ausgabe
14-1
5
Daten-
aus-
kopplung
12-1
Daten-
ein-
bettung
13-1
4
Mess-
daten
17-1
Modul 1
3-1
Daten-
ausgabe
14-(N-1)
5
Daten-
aus-
kopplung
12-(N-1)
Daten-
ein-
bettung
13-(N-1)
4
3
Mess-
daten
17-(N-1)
Modul N-1
3-(N-1)
Daten-
ausgabe
14-N
5
Daten-
aus-
kopplung
12-N
13-N
18-N
Daten-
ein-
bettung
4
1
Daten-
paket-
generator
2
Mess-
daten
17-N
Modul N
3-N

Fig. 4

(1) Frame Generator (only in last module)

IP Head

| Pre | SoF | DA | SA | Type | Version | Head Len | TOS | Total Len | ID | Flags | Frag Offset | TTL | Protocol | Head CS |
|---|---|---|---|---|---|---|---|---|---|---|---|---|---|---|
| 56 | 8 | 48 | 48 | 16 | 4 | 4 | 8 | 16 | 16 | 3 | 13 | 8 | 8 | 16 |

ID: Frame-Nummer, incremented by 1 for subsequential frames

TOS: Delay-Bit, set to 1 to differentiate from regular Ethernet traffic (e.g. µProcessor generated)

UDP Head

| Source IP | Dest IP | Source Port | Dest Port | Length | Check Sum | CRC |
|---|---|---|---|---|---|---|
| 32 | 32 | 16 | 16 | 16 | 16 | 32 |

| HOST CONFIGURED | constarts | Frame generator constarts | Frame generator calculated value |
|---|---|---|---|

Fig. 5A

(2) (3) measuring data insertion, I/O processing (tasks for each I/O module)

| Pre | SoF | DA | SA | Type | Version | Head Len | TOS | Total Len | ID | Flags | Frag Offset | TTL | Protocol | Head CS |
|---|---|---|---|---|---|---|---|---|---|---|---|---|---|---|
| | | | | | IP Head | | | | | | | | | |
| 56 | 8 | 48 | 48 | 16 | 4 | 4 | 8 | | 16 | 3 | 13 | 8 | 8 | 16 |

| Source IP | Dest IP | Source Port | Dest Port | Length | Check Sum |
|---|---|---|---|---|---|
| | | UDP Head | | | |
| 32 | 32 | 16 | 16 | 16 | 16 |

| LEN | CTR | PID | FILL | DAQ | Data | ....... | CRC |
|---|---|---|---|---|---|---|---|
| XCP Dgram 1 | | | | | | XCP Dgram 2 ... n | |
| 16 | 16 | 8 | 8 | 16 | n*8 | | 32 |

| HOST CONFIGURED | unchanged forward | I/O Module calculated value |
|---|---|---|

Fig. 5B

Ethernet UDP/IP frames
......
1
M5
M4
M3
M2
M1
2
M4
M2
3
M3
M1
......
time
Frame period $1/f_{FG}$

Fig. 6

Fig. 7

Ethernet Frame
mit Frame-Nummer
S0
S1
'Minimize Delay' von IP-Header
'Type of service' == 1
nein
ja
S2
(Frame-Nummer & FrameMask)
== FrameID
nein
ja
S3
Neue Messdaten vorhanden ?
nein
ja
S4
Füge XCP-Datagram mit Messdaten
zum Ethernet-Frame hinzu
Stop
S5

ca. 7500 bit
Beispiel:
10 modules 8ch/16bit@10kHz
20 modules 8ch/16bit@1kHz
60 modules 8ch/16bit@10Hz
10kHz modules fit in every frame
10*(64+32+(8*16))= 2240 bit
frameID = 00000000 00000000
frameMask = 00000000 00000000
frame set consists of 65536 frames
1
2
3
4
5
6
7
8
9
10
11
12
13
14
15
16
65535
65536
Zeit
leeres DP
Nutzdaten

Fig. 8A

ca. 7750 bit
frame set consists of 65536 frames
1
2
3
4
5
6
7
8
9
10
11
12
13
14
15
16
65535
65536
Zeit
Beispiel:
10 modules 8ch/16bit@10kHz
20 modules 8ch/16bit@1kHz
60 modules 8ch/16bit@10Hz
1kHz modules every 8th frame
20*(64+32+(8*16))= 4480 bit
frameID = 0 0 0 0 0 0 0 0 0 0 0 0 0 0 0 1
frameMask = 0 0 0 0 0 0 0 0 0 0 0 0 0 1 1 1

Fig. 8B

ca. 7550 bit
1
2
3
4
5
6
7
8
9
10
11
12
13
14
15
16
...
65535
65536
Zeit
frame set consists of 65536 frames
Beispiel:
10 modules 8ch/16bit@10kHz
20 modules 8ch/16bit@1kHz
60 modules 8ch/16bit@10Hz
10Hz modules every 512th frame
100*(64+32+(8*16))=22400 bit
but only 830 bits free in 1st frame
3 modules fit in 1st frame
frameID = 00000000 00000001
frameMask = 00000001 11111111
23 modules fit in 2nd frame
frameID = 00000000 00000010
frameMask = 00000001 11111111
23 modules fit in 3nd frame
frameID = 00000000 00000011
frameMask = 00000001 11111111
11 modules fit in 4th frame
frameID = 00000000 00000100
frameMask = 00000001 11111111
60

Fig. 8C

Fig. 9.1

```
FrameMask =    1
===============
                          1         2         3
FrameNumber     01234567890123456789012345678901

FrameID =    0  x_x_x_x_x_x_x_x_x_x_x_x_x_x_x_x_
FrameID =    1  _x_x_x_x_x_x_x_x_x_x_x_x_x_x_x_x
**********************************************
```

Fig. 9.2

```
FrameMask =    2
===============
                          1         2         3
FrameNumber     01234567890123456789012345678901

FrameID =    0  xx__xx__xx__xx__xx__xx__xx__xx__
FrameID =    1  ________________________________
FrameID =    2  __xx__xx__xx__xx__xx__xx__xx__xx
**********************************************
```

Fig. 9.3

```
FrameMask =    3
===============
                          1         2         3
FrameNumber     01234567890123456789012345678901

FrameID =    0  x___x___x___x___x___x___x___x___
FrameID =    1  _x___x___x___x___x___x___x___x__
FrameID =    2  __x___x___x___x___x___x___x___x_
FrameID =    3  ___x___x___x___x___x___x___x___x
**********************************************
```

Fig. 9.4

```
FrameMask =    4
===============
                          1         2         3
FrameNumber     01234567890123456789012345678901

FrameID =    0  xxxx____xxxx____xxxx____xxxx____
FrameID =    1  ________________________________
FrameID =    2  ________________________________
FrameID =    3  ________________________________
FrameID =    4  ____xxxx____xxxx____xxxx____xxxx
**********************************************
```

Fig. 9.5

```
FrameMask =    5
===============
                          1         2         3
FrameNumber     01234567890123456789012345678901

FrameID =    0  x_x_____x_x_____x_x_____x_x_____
FrameID =    1  _x_x_____x_x_____x_x_____x_x____
FrameID =    2  ________________________________
FrameID =    3  ________________________________
FrameID =    4  ____x_x_____x_x_____x_x_____x_x_
FrameID =    5  _____x_x_____x_x_____x_x_____x_x
**********************************************
```

**Fig. 9.6**

```
FrameMask =    6
===============
                          1         2         3
FrameNumber    01234567890123456789012345678901

FrameID =   0  xx______xx______xx______xx______
FrameID =   1  ________________________________
FrameID =   2  __xx______xx______xx______xx____
FrameID =   3  ________________________________
FrameID =   4  ____xx______xx______xx______xx__
FrameID =   5  ________________________________
FrameID =   6  ______xx______xx______xx______xx
****************************************
```

**Fig. 9.7**

```
FrameMask =    7
===============
                          1         2         3
FrameNumber    01234567890123456789012345678901

FrameID =   0  x_______x_______x_______x_______
FrameID =   1  _x_______x_______x_______x______
FrameID =   2  __x_______x_______x_______x_____
FrameID =   3  ___x_______x_______x_______x____
FrameID =   4  ____x_______x_______x_______x___
FrameID =   5  _____x_______x_______x_______x__
FrameID =   6  ______x_______x_______x_______x_
FrameID =   7  _______x_______x_______x_______x
****************************************
```

**Fig. 9.8**

```
FrameMask =    8
===============
                          1         2         3
FrameNumber    01234567890123456789012345678901

FrameID =   0  xxxxxxxx________xxxxxxxx________
FrameID =   1  ________________________________
FrameID =   2  ________________________________
FrameID =   3  ________________________________
FrameID =   4  ________________________________
FrameID =   5  ________________________________
FrameID =   6  ________________________________
FrameID =   7  ________________________________
FrameID =   8  ________xxxxxxxx________xxxxxxxx
****************************************
```

Fig. 9.9

```
FrameMask =    9
===============
                         1         2         3
FrameNumber    01234567890123456789012345678901

FrameID =  0   x_x_x_x_________x_x_x_x_________
FrameID =  1   _x_x_x_x_________x_x_x_x________
FrameID =  2   ________________________________
FrameID =  3   ________________________________
FrameID =  4   ________________________________
FrameID =  5   ________________________________
FrameID =  6   ________________________________
FrameID =  7   ________________________________
FrameID =  8   ________x_x_x_x_________x_x_x_x_
FrameID =  9   _________x_x_x_x_________x_x_x_x
***************************************************
```

Fig. 9.10

```
FrameMask =   10
===============
                         1         2         3
FrameNumber    01234567890123456789012345678901

FrameID =  0   xx__xx__________xx__xx__________
FrameID =  1   ________________________________
FrameID =  2   __xx__xx__________xx__xx________
FrameID =  3   ________________________________
FrameID =  4   ________________________________
FrameID =  5   ________________________________
FrameID =  6   ________________________________
FrameID =  7   ________________________________
FrameID =  8   ________xx__xx__________xx__xx__
FrameID =  9   ________________________________
FrameID = 10   __________xx__xx__________xx__xx
***************************************************
```

Fig. 9.11

```
FrameMask =   11
===============
                         1         2         3
FrameNumber    01234567890123456789012345678901

FrameID =  0   x___x___________x___x___________
FrameID =  1   _x___x___________x___x__________
FrameID =  2   __x___x___________x___x_________
FrameID =  3   ___x___x___________x___x________
FrameID =  4   ________________________________
FrameID =  5   ________________________________
FrameID =  6   ________________________________
FrameID =  7   ________________________________
FrameID =  8   ________x___x___________x___x___
FrameID =  9   _________x___x___________x___x__
FrameID = 10   __________x___x___________x___x_
FrameID = 11   ___________x___x___________x___x
***************************************************
```

Fig. 9.12

```
FrameMask =   12
===============
                            1         2         3
FrameNumber       01234567890123456789012345678901

FrameID =   0     xxxx____________xxxx____________
FrameID =   1     ________________________________
FrameID =   2     ________________________________
FrameID =   3     ________________________________
FrameID =   4     ____xxxx____________xxxx________
FrameID =   5     ________________________________
FrameID =   6     ________________________________
FrameID =   7     ________________________________
FrameID =   8     ________xxxx____________xxxx____
FrameID =   9     ________________________________
FrameID =  10     ________________________________
FrameID =  11     ________________________________
FrameID =  12     ____________xxxx____________xxxx
****************************************
```

Fig. 9.13

```
FrameMask =   13
===============
                            1         2         3
FrameNumber       01234567890123456789012345678901

FrameID =   0     x_x_____________x_x_____________
FrameID =   1     _x_x_____________x_x____________
FrameID =   2     ________________________________
FrameID =   3     ________________________________
FrameID =   4     ____x_x_____________x_x_________
FrameID =   5     _____x_x_____________x_x________
FrameID =   6     ________________________________
FrameID =   7     ________________________________
FrameID =   8     ________x_x_____________x_x_____
FrameID =   9     _________x_x_____________x_x____
FrameID =  10     ________________________________
FrameID =  11     ________________________________
FrameID =  12     ____________x_x_____________x_x_
FrameID =  13     _____________x_x_____________x_x
****************************************
```

Fig. 9.14

```
FrameMask =    14
==============
                            1         2         3
FrameNumber     01234567890123456789012345678901

FrameID =    0  xx______________xx______________
FrameID =    1  ________________________________
FrameID =    2  __xx______________xx____________
FrameID =    3  ________________________________
FrameID =    4  ____xx______________xx__________
FrameID =    5  ________________________________
FrameID =    6  ______xx______________xx________
FrameID =    7  ________________________________
FrameID =    8  ________xx______________xx______
FrameID =    9  ________________________________
FrameID =   10  __________xx______________xx____
FrameID =   11  ________________________________
FrameID =   12  ____________xx______________xx__
FrameID =   13  ________________________________
FrameID =   14  ______________xx______________xx
****************************************
```

Fig. 9.15

```
FrameMask =    15
==============
                            1         2         3
FrameNumber     01234567890123456789012345678901

FrameID =    0  x_______________x_______________
FrameID =    1  _x_______________x______________
FrameID =    2  __x_______________x_____________
FrameID =    3  ___x_______________x____________
FrameID =    4  ____x_______________x___________
FrameID =    5  _____x_______________x__________
FrameID =    6  ______x_______________x_________
FrameID =    7  _______x_______________x________
FrameID =    8  ________x_______________x_______
FrameID =    9  _________x_______________x______
FrameID =   10  __________x_______________x_____
FrameID =   11  ___________x_______________x____
FrameID =   12  ____________x_______________x___
FrameID =   13  _____________x_______________x__
FrameID =   14  ______________x_______________x_
FrameID =   15  _______________x_______________x
****************************************
```

**Fig. 9.16**

```
FrameMask =    16
===============
                         1         2         3
FrameNumber    01234567890123456789012345678901

FrameID =   0  xxxxxxxxxxxxxxxx________________
FrameID =   1  ________________________________
FrameID =   2  ________________________________
FrameID =   3  ________________________________
FrameID =   4  ________________________________
FrameID =   5  ________________________________
FrameID =   6  ________________________________
FrameID =   7  ________________________________
FrameID =   8  ________________________________
FrameID =   9  ________________________________
FrameID =  10  ________________________________
FrameID =  11  ________________________________
FrameID =  12  ________________________________
FrameID =  13  ________________________________
FrameID =  14  ________________________________
FrameID =  15  ________________________________
FrameID =  16  ________________xxxxxxxxxxxxxxxx
****************************************
```

**Fig. 9.17**

```
FrameMask =    17
===============
                         1         2         3
FrameNumber    01234567890123456789012345678901

FrameID =   0  x_x_x_x_x_x_x_x_________________
FrameID =   1  _x_x_x_x_x_x_x_x________________
FrameID =   2  ________________________________
FrameID =   3  ________________________________
FrameID =   4  ________________________________
FrameID =   5  ________________________________
FrameID =   6  ________________________________
FrameID =   7  ________________________________
FrameID =   8  ________________________________
FrameID =   9  ________________________________
FrameID =  10  ________________________________
FrameID =  11  ________________________________
FrameID =  12  ________________________________
FrameID =  13  ________________________________
FrameID =  14  ________________________________
FrameID =  15  ________________________________
FrameID =  16  ________________x_x_x_x_x_x_x_x_
FrameID =  17  ________________x_x_x_x_x_x_x_x
****************************************
```

Fig. 9.18

```
FrameMask =  18
===============
                          1         2         3
FrameNumber     01234567890123456789012345678901

FrameID =   0   xx__xx__xx__xx__________________
FrameID =   1   ________________________________
FrameID =   2   __xx__xx__xx__xx________________
FrameID =   3   ________________________________
FrameID =   4   ________________________________
FrameID =   5   ________________________________
FrameID =   6   ________________________________
FrameID =   7   ________________________________
FrameID =   8   ________________________________
FrameID =   9   ________________________________
FrameID =  10   ________________________________
FrameID =  11   ________________________________
FrameID =  12   ________________________________
FrameID =  13   ________________________________
FrameID =  14   ________________________________
FrameID =  15   ________________________________
FrameID =  16   ________________xx__xx__xx__xx__
FrameID =  17   ________________________________
FrameID =  18   __________________xx__xx__xx__xx
****************************************
```

Fig. 9.19

```
FrameMask =  19
===============
                          1         2         3
FrameNumber     01234567890123456789012345678901

FrameID =   0   x___x___x___x___________________
FrameID =   1   _x___x___x___x__________________
FrameID =   2   __x___x___x___x_________________
FrameID =   3   ___x___x___x___x________________
FrameID =   4   ________________________________
FrameID =   5   ________________________________
FrameID =   6   ________________________________
FrameID =   7   ________________________________
FrameID =   8   ________________________________
FrameID =   9   ________________________________
FrameID =  10   ________________________________
FrameID =  11   ________________________________
FrameID =  12   ________________________________
FrameID =  13   ________________________________
FrameID =  14   ________________________________
FrameID =  15   ________________________________
FrameID =  16   ________________x___x___x___x___
FrameID =  17   _________________x___x___x___x__
FrameID =  18   __________________x___x___x___x_
FrameID =  19   ___________________x___x___x___x
****************************************
```

Fig. 9.20

```
FrameMask =   20
===============
                       1         2         3
FrameNumber  01234567890123456789012345678901

FrameID =  0  xxxx____xxxx____________________
FrameID =  1  ________________________________
FrameID =  2  ________________________________
FrameID =  3  ________________________________
FrameID =  4  ____xxxx____xxxx________________
FrameID =  5  ________________________________
FrameID =  6  ________________________________
FrameID =  7  ________________________________
FrameID =  8  ________________________________
FrameID =  9  ________________________________
FrameID = 10  ________________________________
FrameID = 11  ________________________________
FrameID = 12  ________________________________
FrameID = 13  ________________________________
FrameID = 14  ________________________________
FrameID = 15  ________________________________
FrameID = 16  ________________xxxx____xxxx____
FrameID = 17  ________________________________
FrameID = 18  ________________________________
FrameID = 19  ________________________________
FrameID = 20  ____________________xxxx____xxxx
********************************************
```

Fig. 9.21

```
FrameMask =   21
===============
                       1         2         3
FrameNumber  01234567890123456789012345678901

FrameID =  0  x_x_____x_x_____________________
FrameID =  1  _x_x_____x_x____________________
FrameID =  2  ________________________________
FrameID =  3  ________________________________
FrameID =  4  ____x_x_____x_x_________________
FrameID =  5  _____x_x_____x_x________________
FrameID =  6  ________________________________
FrameID =  7  ________________________________
FrameID =  8  ________________________________
FrameID =  9  ________________________________
FrameID = 10  ________________________________
FrameID = 11  ________________________________
FrameID = 12  ________________________________
FrameID = 13  ________________________________
FrameID = 14  ________________________________
FrameID = 15  ________________________________
FrameID = 16  ________________x_x_____x_x_____
FrameID = 17  _________________x_x_____x_x____
FrameID = 18  ________________________________
FrameID = 19  ________________________________
FrameID = 20  ____________________x_x_____x_x_
FrameID = 21  _____________________x_x_____x_x
********************************************
```

Fig. 9.22

```
FrameMask =   22
===============
                           1         2         3
FrameNumber    01234567890123456789012345678901

FrameID =   0  xx______xx______________________
FrameID =   1  ________________________________
FrameID =   2  __xx______xx____________________
FrameID =   3  ________________________________
FrameID =   4  ____xx______xx__________________
FrameID =   5  ________________________________
FrameID =   6  ______xx______xx________________
FrameID =   7  ________________________________
FrameID =   8  ________________________________
FrameID =   9  ________________________________
FrameID =  10  ________________________________
FrameID =  11  ________________________________
FrameID =  12  ________________________________
FrameID =  13  ________________________________
FrameID =  14  ________________________________
FrameID =  15  ________________________________
FrameID =  16  ________________xx______xx______
FrameID =  17  ________________________________
FrameID =  18  __________________xx______xx____
FrameID =  19  ________________________________
FrameID =  20  ____________________xx______xx__
FrameID =  21  ________________________________
FrameID =  22  ______________________xx______xx
*****************************************
```

Fig. 9.23

```
FrameMask =   23
==============
                           1         2         3
FrameNumber     01234567890123456789012345678901

FrameID =    0  x_______x_______________________
FrameID =    1  _x_______x______________________
FrameID =    2  __x_______x_____________________
FrameID =    3  ___x_______x____________________
FrameID =    4  ____x_______x___________________
FrameID =    5  _____x_______x__________________
FrameID =    6  ______x_______x_________________
FrameID =    7  _______x_______x________________
FrameID =    8  ________________________________
FrameID =    9  ________________________________
FrameID =   10  ________________________________
FrameID =   11  ________________________________
FrameID =   12  ________________________________
FrameID =   13  ________________________________
FrameID =   14  ________________________________
FrameID =   15  ________________________________
FrameID =   16  ________________x_______x_______
FrameID =   17  _________________x_______x______
FrameID =   18  __________________x_______x_____
FrameID =   19  ___________________x_______x____
FrameID =   20  ____________________x_______x___
FrameID =   21  _____________________x_______x__
FrameID =   22  ______________________x_______x_
FrameID =   23  _______________________x_______x
******************************************
```

Fig. 9.24

```
FrameMask =   24
===============
                             1         2         3
FrameNumber      01234567890123456789012345678901

FrameID =    0   xxxxxxxx________________________
FrameID =    1   ________________________________
FrameID =    2   ________________________________
FrameID =    3   ________________________________
FrameID =    4   ________________________________
FrameID =    5   ________________________________
FrameID =    6   ________________________________
FrameID =    7   ________________________________
FrameID =    8   ________xxxxxxxx________________
FrameID =    9   ________________________________
FrameID =   10   ________________________________
FrameID =   11   ________________________________
FrameID =   12   ________________________________
FrameID =   13   ________________________________
FrameID =   14   ________________________________
FrameID =   15   ________________________________
FrameID =   16   ________________xxxxxxxx________
FrameID =   17   ________________________________
FrameID =   18   ________________________________
FrameID =   19   ________________________________
FrameID =   20   ________________________________
FrameID =   21   ________________________________
FrameID =   22   ________________________________
FrameID =   23   ________________________________
FrameID =   24   ________________________xxxxxxxx
*****************************************
```

Fig. 9.25

```
FrameMask =   25
===============
                        1         2         3
FrameNumber   01234567890123456789012345678901

FrameID =  0  x_x_x_x_________________________
FrameID =  1  _x_x_x_x________________________
FrameID =  2  ________________________________
FrameID =  3  ________________________________
FrameID =  4  ________________________________
FrameID =  5  ________________________________
FrameID =  6  ________________________________
FrameID =  7  ________________________________
FrameID =  8  ________x_x_x_x_________________
FrameID =  9  _________x_x_x_x________________
FrameID = 10  ________________________________
FrameID = 11  ________________________________
FrameID = 12  ________________________________
FrameID = 13  ________________________________
FrameID = 14  ________________________________
FrameID = 15  ________________________________
FrameID = 16  ________________x_x_x_x_________
FrameID = 17  _________________x_x_x_x________
FrameID = 18  ________________________________
FrameID = 19  ________________________________
FrameID = 20  ________________________________
FrameID = 21  ________________________________
FrameID = 22  ________________________________
FrameID = 23  ________________________________
FrameID = 24  ________________________x_x_x_x_
FrameID = 25  _________________________x_x_x_x
****************************************
```

Fig. 9.26

```
FrameMask =  26
===============
                          1         2         3
FrameNumber     01234567890123456789012345678901

FrameID =  0    xx__xx__________________________
FrameID =  1    ________________________________
FrameID =  2    __xx__xx________________________
FrameID =  3    ________________________________
FrameID =  4    ________________________________
FrameID =  5    ________________________________
FrameID =  6    ________________________________
FrameID =  7    ________________________________
FrameID =  8    ________xx__xx__________________
FrameID =  9    ________________________________
FrameID = 10    __________xx__xx________________
FrameID = 11    ________________________________
FrameID = 12    ________________________________
FrameID = 13    ________________________________
FrameID = 14    ________________________________
FrameID = 15    ________________________________
FrameID = 16    ________________xx__xx__________
FrameID = 17    ________________________________
FrameID = 18    __________________xx__xx________
FrameID = 19    ________________________________
FrameID = 20    ________________________________
FrameID = 21    ________________________________
FrameID = 22    ________________________________
FrameID = 23    ________________________________
FrameID = 24    ________________________xx__xx__
FrameID = 25    ________________________________
FrameID = 26    __________________________xx__xx
*********************************************
```

Fig. 9.27

```
FrameMask =   27
===============
                          1         2         3
FrameNumber     01234567890123456789012345678901

FrameID =   0   x___x___________________________
FrameID =   1   _x___x__________________________
FrameID =   2   __x___x_________________________
FrameID =   3   ___x___x________________________
FrameID =   4   ________________________________
FrameID =   5   ________________________________
FrameID =   6   ________________________________
FrameID =   7   ________________________________
FrameID =   8   ________x___x___________________
FrameID =   9   _________x___x__________________
FrameID =  10   __________x___x_________________
FrameID =  11   ___________x___x________________
FrameID =  12   ________________________________
FrameID =  13   ________________________________
FrameID =  14   ________________________________
FrameID =  15   ________________________________
FrameID =  16   ________________x___x___________
FrameID =  17   _________________x___x__________
FrameID =  18   __________________x___x_________
FrameID =  19   ___________________x___x________
FrameID =  20   ________________________________
FrameID =  21   ________________________________
FrameID =  22   ________________________________
FrameID =  23   ________________________________
FrameID =  24   ________________________x___x___
FrameID =  25   _________________________x___x__
FrameID =  26   __________________________x___x_
FrameID =  27   ___________________________x___x
*****************************************
```

**Fig. 9.28**

```
FrameMask =    28
===============
                                1         2         3
FrameNumber           01234567890123456789012345678901

FrameID =     0       xxxx____________________________
FrameID =     1       ________________________________
FrameID =     2       ________________________________
FrameID =     3       ________________________________
FrameID =     4       ____xxxx________________________
FrameID =     5       ________________________________
FrameID =     6       ________________________________
FrameID =     7       ________________________________
FrameID =     8       ________xxxx____________________
FrameID =     9       ________________________________
FrameID =    10       ________________________________
FrameID =    11       ________________________________
FrameID =    12       ____________xxxx________________
FrameID =    13       ________________________________
FrameID =    14       ________________________________
FrameID =    15       ________________________________
FrameID =    16       ________________xxxx____________
FrameID =    17       ________________________________
FrameID =    18       ________________________________
FrameID =    19       ________________________________
FrameID =    20       ____________________xxxx________
FrameID =    21       ________________________________
FrameID =    22       ________________________________
FrameID =    23       ________________________________
FrameID =    24       ________________________xxxx____
FrameID =    25       ________________________________
FrameID =    26       ________________________________
FrameID =    27       ________________________________
FrameID =    28       ____________________________xxxx
******************************************
```

Fig. 9.29

```
FrameMask =   29
===============
                           1         2         3
FrameNumber      01234567890123456789012345678901

FrameID =  0     x_x_____________________________
FrameID =  1     _x_x____________________________
FrameID =  2     ________________________________
FrameID =  3     ________________________________
FrameID =  4     ____x_x_________________________
FrameID =  5     _____x_x________________________
FrameID =  6     ________________________________
FrameID =  7     ________________________________
FrameID =  8     ________x_x_____________________
FrameID =  9     _________x_x____________________
FrameID = 10     ________________________________
FrameID = 11     ________________________________
FrameID = 12     ____________x_x_________________
FrameID = 13     _____________x_x________________
FrameID = 14     ________________________________
FrameID = 15     ________________________________
FrameID = 16     ________________x_x_____________
FrameID = 17     _________________x_x____________
FrameID = 18     ________________________________
FrameID = 19     ________________________________
FrameID = 20     ____________________x_x_________
FrameID = 21     _____________________x_x________
FrameID = 22     ________________________________
FrameID = 23     ________________________________
FrameID = 24     ________________________x_x_____
FrameID = 25     _________________________x_x____
FrameID = 26     ________________________________
FrameID = 27     ________________________________
FrameID = 28     ____________________________x_x_
FrameID = 29     _____________________________x_x
*****************************************
```

Fig. 9.30

```
FrameMask =  30
===============
                          1         2         3
FrameNumber     01234567890123456789012345678901

FrameID =   0   xx______________________________
FrameID =   1   ________________________________
FrameID =   2   __xx____________________________
FrameID =   3   ________________________________
FrameID =   4   ____xx__________________________
FrameID =   5   ________________________________
FrameID =   6   ______xx________________________
FrameID =   7   ________________________________
FrameID =   8   ________xx______________________
FrameID =   9   ________________________________
FrameID =  10   __________xx____________________
FrameID =  11   ________________________________
FrameID =  12   ____________xx__________________
FrameID =  13   ________________________________
FrameID =  14   ______________xx________________
FrameID =  15   ________________________________
FrameID =  16   ________________xx______________
FrameID =  17   ________________________________
FrameID =  18   __________________xx____________
FrameID =  19   ________________________________
FrameID =  20   ____________________xx__________
FrameID =  21   ________________________________
FrameID =  22   ______________________xx________
FrameID =  23   ________________________________
FrameID =  24   ________________________xx______
FrameID =  25   ________________________________
FrameID =  26   __________________________xx____
FrameID =  27   ________________________________
FrameID =  28   ____________________________xx__
FrameID =  29   ________________________________
FrameID =  30   ______________________________xx
****************************************
```

Fig. 9.31

```
FrameMask =   31
===============
                             1         2         3
FrameNumber       01234567890123456789012345678901

FrameID =    0    x_______________________________
FrameID =    1    _x______________________________
FrameID =    2    __x_____________________________
FrameID =    3    ___x____________________________
FrameID =    4    ____x___________________________
FrameID =    5    _____x__________________________
FrameID =    6    ______x_________________________
FrameID =    7    _______x________________________
FrameID =    8    ________x_______________________
FrameID =    9    _________x______________________
FrameID =   10    __________x_____________________
FrameID =   11    ___________x____________________
FrameID =   12    ____________x___________________
FrameID =   13    _____________x__________________
FrameID =   14    ______________x_________________
FrameID =   15    _______________x________________
FrameID =   16    ________________x_______________
FrameID =   17    _________________x______________
FrameID =   18    __________________x_____________
FrameID =   19    ___________________x____________
FrameID =   20    ____________________x___________
FrameID =   21    _____________________x__________
FrameID =   22    ______________________x_________
FrameID =   23    _______________________x________
FrameID =   24    ________________________x_______
FrameID =   25    _________________________x______
FrameID =   26    __________________________x_____
FrameID =   27    ___________________________x____
FrameID =   28    ____________________________x___
FrameID =   29    _____________________________x__
FrameID =   30    ______________________________x_
FrameID =   31    _______________________________x

****************************************
```

Fig. 10.1

```
FrameMask =   1
===============

FrameID =   0   x_x_x_x_x_x_x_x_x_x_x_x_x_x_x_x_
FrameID =   1   _x_x_x_x_x_x_x_x_x_x_x_x_x_x_x_x

****************************************
```

Fig. 10.2

```
FrameMask =   3
===============

FrameID =   0   x___x___x___x___x___x___x___x___
FrameID =   1   _x___x___x___x___x___x___x___x__
FrameID =   2   __x___x___x___x___x___x___x___x_
FrameID =   3   ___x___x___x___x___x___x___x___x

****************************************
```

Fig. 10.3

```
FrameMask =   7
===============

FrameID =   0   x_______x_______x_______x_______
FrameID =   1   _x_______x_______x_______x______
FrameID =   2   __x_______x_______x_______x_____
FrameID =   3   ___x_______x_______x_______x____
FrameID =   4   ____x_______x_______x_______x___
FrameID =   5   _____x_______x_______x_______x__
FrameID =   6   ______x_______x_______x_______x_
FrameID =   7   _______x_______x_______x_______x

****************************************
```

Fig. 10.4

```
FrameMask =  15
===============

FrameID =   0   x_______________x_______________
FrameID =   1   _x_______________x______________
FrameID =   2   __x_______________x_____________
FrameID =   3   ___x_______________x____________
FrameID =   4   ____x_______________x___________
FrameID =   5   _____x_______________x__________
FrameID =   6   ______x_______________x_________
FrameID =   7   _______x_______________x________
FrameID =   8   ________x_______________x_______
FrameID =   9   _________x_______________x______
FrameID =  10   __________x_______________x_____
FrameID =  11   ___________x_______________x____
FrameID =  12   ____________x_______________x___
FrameID =  13   _____________x_______________x__
FrameID =  14   ______________x_______________x_
FrameID =  15   _______________x_______________x

****************************************
```

Fig. 10.5

```
FrameMask =  31
===============

FrameID =  0  x_______________________________
FrameID =  1  _x______________________________
FrameID =  2  __x_____________________________
FrameID =  3  ___x____________________________
FrameID =  4  ____x___________________________
FrameID =  5  _____x__________________________
FrameID =  6  ______x_________________________
FrameID =  7  _______x________________________
FrameID =  8  ________x_______________________
FrameID =  9  _________x______________________
FrameID = 10  __________x_____________________
FrameID = 11  ___________x____________________
FrameID = 12  ____________x___________________
FrameID = 13  _____________x__________________
FrameID = 14  ______________x_________________
FrameID = 15  _______________x________________
FrameID = 16  ________________x_______________
FrameID = 17  _________________x______________
FrameID = 18  __________________x_____________
FrameID = 19  ___________________x____________
FrameID = 20  ____________________x___________
FrameID = 21  _____________________x__________
FrameID = 22  ______________________x_________
FrameID = 23  _______________________x________
FrameID = 24  ________________________x_______
FrameID = 25  _________________________x______
FrameID = 26  __________________________x_____
FrameID = 27  ___________________________x____
FrameID = 28  ____________________________x___
FrameID = 29  _____________________________x__
FrameID = 30  ______________________________x_
FrameID = 31  _______________________________x
****************************************
```

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4237553 A
- EP 1298849 A2
- WO 03056764 A1
- EP 0503212 A1